(19) Europäisches Patentamt / European Patent Office / Office européen des brevets

(11) **EP 4 576 624 A1**

(12) **EUROPEAN PATENT APPLICATION**
published in accordance with Art. 153(4) EPC

(43) Date of publication:
**25.06.2025 Bulletin 2025/26**

(21) Application number: **23862013.2**

(22) Date of filing: **29.06.2023**

(51) International Patent Classification (IPC):
**H04L 1/00** (2006.01)

(52) Cooperative Patent Classification (CPC):
**H04L 1/00**

(86) International application number:
**PCT/CN2023/104017**

(87) International publication number:
**WO 2024/051312 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.09.2022 CN 202211083804**

(71) Applicant: **Huawei Technologies Co., Ltd.
Shenzhen, Guangdong 518129 (CN)**

(72) Inventors:
• **GONG, Bo**
  **Shenzhen, Guangdong 518129 (CN)**
• **GAN, Ming**
  **Shenzhen, Guangdong 518129 (CN)**
• **HU, Mengshi**
  **Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND COMMUNICATION APPARATUS**

(57) Embodiments of this application provide a communication method. The method is applied to a wireless local area network system that supports 802.11 series protocols, for example, a next-generation Wi-Fi protocol of IEEE 802.11ax, such as 802.11be, Wi-Fi 7, or EHT, or for another example, a next-generation protocol of 802.11be, Wi-Fi 8, UHR, or Wi-Fi AI, and may be further applied to an ultra-wideband UWB-based wireless personal area network system and a sensing (sensing) system. The method includes: A transmit-end device generates and sends a PPDU, where the PPDU includes a high-frequency physical layer signal, the high-frequency physical layer signal is carried in a subcarrier of a high-frequency channel, and the high-frequency physical layer signal is obtained by duplicating a basic physical layer signal M times. The basic physical layer signal is duplicated M times for sending, so that a transmission rate of the high-frequency physical layer signal can be reduced, and the high-frequency physical layer signal can adapt to transmission in a scenario with a low signal-to-noise ratio.

FIG. 3

EP 4 576 624 A1

## Description

This application claims priority to Chinese Patent Application No. 202211083804.3, filed with the China National Intellectual Property Administration on September 6, 2022 and entitled "COMMUNICATION METHOD AND COMMUNICATION APPARATUS", which is incorporated herein by reference in its entirety.

## TECHNICAL FIELD

Embodiments of this application relate to the field of communication technologies, and more specifically, to a communication method and a communication apparatus.

## BACKGROUND

Development of a wireless local area network (wireless local area network, WLAN) makes wireless communication increasingly popular. A standard formulated by the Institute of Electrical and Electronics Engineers (International Society of Electrical Engineering, IEEE) for the WLAN also continuously evolves, and has evolved from a protocol standard supporting low-band communication to a protocol standard supporting high-band communication. For example, protocol standards for low frequency bands include 802.11a/g, 802.11n, 802.11ac, 802.11ax, and 802.11be, and supported frequency bands include one or more of 2.4 GHz, 5 GHz, or 6 GHz; and protocol standards for high frequency bands include 802.11aj/ay, and supported frequency bands include one or more of 45 GHz or 60 GHz.

For low-band communication at 2.4 GHz, 5 GHz, or 6 GHz, an omnidirectional wide beam is usually used. For high-band communication at 45 GHz or 60 GHz, a directional narrow beam is usually used for communication. Therefore, for high-band communication, beam search and alignment need to be performed. During beam search and alignment, when an omnidirectional beam is used on a side of a transmit end or a receive end, and a directional beam is used on the other side, a signal-to-noise ratio of a transmitted signal needs to be low. In consideration of an association relationship (for example, a Shannon formula) between a signal-to-noise ratio of a signal and a transmission rate of the signal, the transmission rate of the signal may be adjusted to adjust the signal-to-noise ratio of the signal. How to adjust a transmission rate of a signal in a high-band communication scenario becomes a problem that urgently needs to be resolved.

## SUMMARY

Embodiments of this application provide a communication method. A signal mode is designed for a high-frequency signal, to reduce a transmission rate of the high-frequency signal, so that the high-frequency signal adapts to transmission in a communication scenario with a low signal-to-noise ratio.

According to a first aspect, a communication method is provided. The method may be performed by a transmit-end device, or may be performed by a component (for example, a chip or a circuit) of a transmit-end device. This is not limited. For ease of description, a device or a component that performs the method is collectively referred to as a transmit-end device below for description. The transmit-end device may be an access point (Access Point, AP) or a non-AP station (non-AP station, non-AP STA).

The communication method includes: A transmit-end device generates a physical layer protocol data unit PPDU, where the PPDU includes a high-frequency physical layer signal, the high-frequency physical layer signal is carried in a subcarrier of a high-frequency channel, and the high-frequency physical layer signal is obtained by duplicating a basic physical layer signal M times. The transmit-end device sends the PPDU to a receive-end device.

According to a second aspect, a communication method is provided. The method may be performed by a receive-end device, or may be performed by a component (for example, a chip or a circuit) of a receive-end device. This is not limited. For ease of description, a device or a component that performs the method is collectively referred to as a receive-end device below for description. The receive-end device may be an AP or a non-AP STA. For example, when the transmit-end device is an AP, the receive-end device is a non-AP STA. For another example, when the transmit-end device is a non-AP STA, the receive-end device is an AP.

The communication method includes: A receive-end device receives a physical layer protocol data unit PPDU from a transmit-end device. The receive-end device demodulates the PPDU, where the PPDU includes a high-frequency physical layer signal, the high-frequency physical layer signal is carried in a subcarrier of a high-frequency channel, and the high-frequency physical layer signal is obtained by duplicating a basic physical layer signal M times.

According to the foregoing technical solution, duration required for first generating a basic physical layer signal for a payload and then duplicating the basic physical layer signal M times to obtain a high-frequency physical layer signal and sending the high-frequency physical layer signal is first duration. If a high-frequency physical layer signal is directly generated for the payload through modulation and sent (there is no process of duplicating a basic physical layer signal M times), required duration is approximately 1/M of the first duration. Therefore, in the manner of generating a high-frequency physical layer signal in this embodiment, a transmission rate of a signal corresponding to a same payload is reduced by approximately M times compared with a transmission rate of a signal that is not obtained by duplicating a basic physical layer signal. The transmission rate of the signal is reduced, so that the signal can adapt to a communication scenario with a low signal-to-noise ratio, and can be transmitted in a communication scenario with a low signal-to-noise ratio.

In some implementations of the first aspect or the second aspect, a carrier spacing between subcarriers included in the high-frequency channel is N times a carrier spacing between subcarriers included in a low-frequency channel, and N is greater than 1.

In some implementations of the first aspect or the second aspect, M is related to at least one of the following parameters: bandwidth of the high-frequency physical layer signal, a low-frequency signal mode corresponding to the high-frequency physical layer signal, or a preset target transmission rate of the PPDU.

According to the foregoing technical solution, a specific manner of determining M is not limited in this application, and a value of M may be related to different parameters, so that flexibility of the solution is improved.

In some implementations of the first aspect or the second aspect, the bandwidth of the high-frequency physical layer signal is 2 GHz, and M is 32; or the bandwidth of the high-frequency physical layer signal is 500 MHz, and M is 6; or the bandwidth of the high-frequency physical layer signal is 320 MHz, and M is 4.

According to the foregoing technical solution, there may be different possibilities for the bandwidth of the high-frequency physical layer signal in this application. This indicates that this application can adapt to different communication bandwidth.

In some implementations of the first aspect or the second aspect, the PPDU further includes a preamble part, and the preamble part is obtained by duplicating an orthogonal frequency division multiplexing OFDM symbol M times.

According to the foregoing technical solution, the preamble part of the PPDU may be obtained by duplicating an OFDM symbol M times. To be specific, the duplication for the preamble part of the PPDU may be performed through time domain duplication. The receive-end device may directly superpose OFDM symbols. This is simple and easy to implement.

In some implementations of the first aspect or the second aspect, that the high-frequency physical layer signal is obtained by duplicating a basic physical layer signal M times includes: The high-frequency physical layer signal is generated based on at least modulation symbols carried in M groups of data subcarriers, each group of the M groups of data subcarriers includes P data subcarriers, and the basic physical layer signal includes modulation symbols carried in P data subcarriers.

In some implementations of the first aspect or the second aspect, that the high-frequency physical layer signal is obtained by duplicating a basic physical layer signal M times includes: The high-frequency physical layer signal is obtained by duplicating the basic physical layer signal M times based on a sequence, and the sequence includes M elements or M-1 elements.

In some implementations of the first aspect or the second aspect, the basic physical layer signal is modulation symbols carried in a group of data subcarriers, and the high-frequency physical layer signal is generated based on the modulation symbols carried in the M groups of data subcarriers, where modulation symbols carried in a 1st group of data subcarriers to an $M^{th}$ group of data subcarriers among the M groups of data subcarriers are obtained based on the sequence and modulation symbols carried in a group of data subcarriers, and the sequence includes M elements.

In an implementation, the modulation symbols carried in a group of data subcarriers are modulation symbols carried in the 1st group of data subcarriers among the M groups of data subcarriers. Alternatively, the basic physical layer signal is modulation symbols carried in a 1st group of data subcarriers among the M groups of data subcarriers corresponding to the high-frequency physical layer signal, modulation symbols carried in a 2nd group of data subcarriers to an $M^{th}$ group of data subcarriers among the M groups of data subcarriers are obtained by duplicating, based on the sequence, the modulation symbols carried in the 1st group of data subcarriers, and the sequence includes M-1 elements.

In some implementations of the first aspect or the second aspect, the bandwidth of the high-frequency physical layer signal is 500 MHz, M is 6, P is 8, and the sequence is [1 1 1 -1 -1 -1] or [1 1 -1 1 -1 1]; or the bandwidth of the high-frequency physical layer signal is 2 GHz, M is 32, P is 7, and the sequence is [1 1 -1 1 -1 1 1 1 -1 1 -1 1 1 1 1 1 -1 1 -1 -1 1 1 1 1 1 -1 -1 1 1 1 -1 -1 1 -1 -1 1 -1 -1 -1] or [1 -1 1 -1 1 1 -1 1 -1 1 1 1 1 -1 1 -1 -1 1 1 1 1 1 -1 -1 1 1 1 -1 -1 1 -1 -1 -1].

In some implementations of the first aspect or the second aspect, that the high-frequency physical layer signal is obtained by duplicating a basic physical layer signal M times includes: The high-frequency physical layer signal is obtained by duplicating the basic physical layer signal M times based on a matrix, and the matrix includes P×M elements or P×(M-1) elements.

In some implementations of the first aspect or the second aspect, the basic physical layer signal is modulation symbols carried in a group of data subcarriers, and the high-frequency physical layer signal is generated based on the modulation symbols carried in the M groups of data subcarriers, where modulation symbols carried in a 1st group of data subcarriers to an $M^{th}$ group of data subcarriers among the M groups of data subcarriers are obtained based on the matrix and modulation symbols carried in a group of data subcarriers, and the matrix includes P×M elements.

In an implementation, the modulation symbols carried in a group of data subcarriers are modulation symbols

carried in the 1st group of data subcarriers among the M groups of data subcarriers.

Alternatively, the basic physical layer signal is modulation symbols carried in a 1st group of data subcarriers among the M groups of data subcarriers corresponding to the high-frequency physical layer signal, modulation symbols carried in a 2nd group of data subcarriers to an Mth group of data subcarriers among the M groups of data subcarriers are obtained by duplicating, based on the matrix, the modulation symbols carried in the 1st group of data subcarriers, and the matrix includes $P\times(M-1)$ elements.

In some implementations of the first aspect or the second aspect, the bandwidth of the high-frequency physical layer signal is 500 MHz, M is 6, P is 8, and the matrix is as follows:

$$
\begin{bmatrix}
1 & 1 & 1 & 1 & -1 & -1 \\
1 & 1 & -1 & 1 & 1 & -1 \\
1 & -1 & -1 & 1 & 1 & -1 \\
1 & 1 & -1 & -1 & -1 & -1 \\
1 & -1 & 1 & -1 & -1 & -1 \\
1 & -1 & 1 & 1 & -1 & 1 \\
1 & 1 & 1 & 1 & 1 & 1 \\
1 & -1 & -1 & 1 & 1 & -1
\end{bmatrix}
\text{ or }
\begin{bmatrix}
1 & 1 & 1 & -1 & -1 \\
1 & -1 & 1 & 1 & -1 \\
-1 & -1 & 1 & 1 & -1 \\
1 & -1 & -1 & -1 & -1 \\
-1 & 1 & -1 & -1 & -1 \\
-1 & 1 & 1 & -1 & 1 \\
1 & 1 & 1 & 1 & 1 \\
-1 & -1 & 1 & 1 & -1
\end{bmatrix};
$$

or

the bandwidth of the high-frequency physical layer signal is 2 GHz, M is 32, P is 7, and the matrix is as follows:

$$
\begin{bmatrix}
1 & 1 & -1 & -1 & 1 & -1 & 1 & 1 & -1 & 1 & 1 & -1 & -1 & 1 & 1 & 1 & 1 & -1 & 1 & -1 & -1 & 1 & 1 & 1 & -1 & -1 & 1 & -1 & 1 & 1 & -1 & -1 \\
1 & -1 & -1 & -1 & -1 & -1 & -1 & -1 & 1 & -1 & -1 & 1 & -1 & -1 & -1 & 1 & 1 & 1 & -1 & -1 & -1 & -1 & -1 & -1 & 1 & -1 & 1 & -1 & -1 & -1 & -1 & -1 \\
1 & -1 & -1 & -1 & -1 & -1 & 1 & -1 & -1 & -1 & 1 & -1 & 1 & 1 & 1 & -1 & -1 & 1 & -1 & 1 & 1 & 1 & 1 & 1 & 1 & -1 & -1 & 1 & -1 & 1 & -1 & 1 & 1 \\
1 & -1 & 1 & 1 & 1 & -1 & 1 & 1 & -1 & -1 & -1 & -1 & -1 & 1 & -1 & -1 & -1 & 1 & -1 & 1 & -1 & 1 & 1 & -1 & 1 & -1 & 1 & -1 & -1 & 1 & -1 & 1 \\
1 & 1 & -1 & -1 & 1 & 1 & -1 & 1 & -1 & 1 & -1 & -1 & -1 & 1 & 1 & 1 & 1 & -1 & -1 & -1 & -1 & -1 & -1 & 1 & 1 & 1 & -1 & -1 & -1 & 1 & -1 \\
1 & 1 & -1 & 1 & -1 & -1 & 1 & -1 & 1 & -1 & -1 & 1 & -1 & -1 & -1 & -1 & 1 & 1 & 1 & 1 & 1 & -1 & -1 & 1 & 1 & 1 & -1 & -1 & -1 & 1 & 1 \\
1 & 1 & 1 & -1 & -1 & 1 & -1 & -1 & -1 & -1 & -1 & 1 & 1 & -1 & 1 & 1 & -1 & 1 & 1 & 1 & -1 & 1 & -1 & 1 & 1 & 1 & 1 & -1 & -1 & -1 & 1 & -1
\end{bmatrix},
$$

or

$$
\begin{bmatrix}
1 & -1 & -1 & 1 & -1 & 1 & 1 & -1 & 1 & 1 & -1 & -1 & 1 & 1 & 1 & 1 & -1 & 1 & -1 & -1 & 1 & 1 & 1 & -1 & -1 & 1 & -1 & 1 & 1 & -1 & -1 \\
-1 & -1 & -1 & -1 & -1 & -1 & -1 & 1 & -1 & -1 & 1 & -1 & -1 & -1 & 1 & 1 & -1 & -1 & -1 & -1 & -1 & -1 & 1 & -1 & 1 & -1 & -1 & -1 & -1 & -1 \\
-1 & -1 & -1 & -1 & 1 & -1 & -1 & -1 & 1 & -1 & 1 & 1 & 1 & -1 & -1 & 1 & -1 & 1 & 1 & 1 & 1 & 1 & 1 & -1 & -1 & 1 & -1 & 1 & -1 & 1 & 1 \\
-1 & 1 & 1 & 1 & -1 & 1 & 1 & -1 & -1 & -1 & -1 & -1 & 1 & -1 & -1 & -1 & 1 & -1 & 1 & -1 & 1 & 1 & -1 & 1 & -1 & 1 & -1 & -1 & 1 & -1 & 1 \\
1 & -1 & -1 & 1 & 1 & -1 & 1 & -1 & 1 & -1 & -1 & -1 & 1 & 1 & 1 & 1 & -1 & -1 & -1 & -1 & -1 & -1 & 1 & 1 & 1 & -1 & -1 & -1 & 1 & -1 \\
1 & -1 & 1 & -1 & -1 & 1 & -1 & 1 & -1 & -1 & 1 & -1 & -1 & -1 & -1 & 1 & 1 & 1 & 1 & 1 & -1 & -1 & 1 & 1 & 1 & -1 & -1 & -1 & 1 & 1 & 1 \\
1 & 1 & -1 & -1 & 1 & -1 & -1 & -1 & -1 & -1 & 1 & 1 & -1 & 1 & 1 & -1 & 1 & 1 & 1 & -1 & 1 & -1 & 1 & 1 & 1 & 1 & -1 & -1 & -1 & 1 & -1
\end{bmatrix}.
$$

In some implementations of the first aspect or the second aspect, that the high-frequency physical layer signal is obtained by duplicating a basic physical layer signal M times includes:

The high-frequency physical layer signal is obtained by duplicating the basic physical layer signal M times based on a duplication mode, and the duplication mode includes at least one of the following: performing symbol negation on a modulation symbol carried in an even-numbered subcarrier, and keeping a modulation symbol carried in an odd-numbered subcarrier unchanged; or performing symbol negation on a modulation symbol carried in an odd-numbered subcarrier, and keeping a modulation symbol carried in an even-numbered subcarrier unchanged; or duplicating modulation symbols carried in all subcarriers; or performing symbol negation on modulation symbols carried in all subcarriers.

In some implementations of the first aspect or the second aspect, the basic physical layer signal is modulation symbols carried in a group of data subcarriers, and the high-frequency physical layer signal is generated based on the modulation symbols carried in the M groups of data subcarriers, where modulation symbols carried in a 1st group of data subcarriers to an Mth group of data subcarriers among the M groups of data subcarriers are obtained by duplicating, M times based on the duplication mode, modulation symbols carried in a group of data subcarriers.

In an implementation, the modulation symbols carried in a group of data subcarriers are modulation symbols carried in the 1st group of data subcarriers among the M groups of data subcarriers.

Alternatively, the basic physical layer signal is modulation symbols carried in a 1st group of data subcarriers among the M groups of data subcarriers corresponding to the high-frequency physical layer signal, and modulation symbols carried in a 2nd group of data subcarriers to an Mth group of data subcarriers among the M groups of data subcarriers are obtained by duplicating, M-1 times based on the duplication mode, the modulation symbols carried in the $1^{st}$ group of data subcarriers.

In some implementations of the first aspect or the second aspect, when the bandwidth of the high-frequency physical layer signal is 320 M, M is 4, and a total quantity of the data subcarriers is 52, the duplication mode includes: duplicating modulation symbols carried in data subcarriers in the $1^{st}$ group of data subcarriers, and performing symbol negation on a modulation symbol carried in an even-numbered data subcarrier, to obtain modulation symbols carried in the $2^{nd}$ group of data subcarriers; duplicating the modulation symbols carried in the data subcarriers in the $1^{st}$ group of data subcarriers, and performing symbol negation on modulation symbols carried in 13 data subcarriers, to obtain modulation symbols carried in a $3^{rd}$ group of data subcarriers; and duplicating modulation symbols carried in data subcarriers in the $2^{nd}$ group of data subcarriers, to obtain modulation symbols of a $4^{th}$ group of data subcarriers.

In some implementations of the first aspect or the second aspect, the $2^{nd}$ group of data subcarriers to the $M^{th}$ group of data subcarriers correspond to different duplication modes.

In some implementations of the first aspect or the second aspect, that the high-frequency physical layer signal is obtained by duplicating a basic physical layer signal M times includes: The high-frequency physical layer signal is obtained by duplicating the basic physical layer signal M times based on an extension sequence, where the basic physical layer signal is a signal obtained through binary convolutional code BCC encoding, and the extension sequence includes M elements.

In some implementations of the first aspect or the second aspect, when M is 4, the extension sequence is [1 0 0 1].

According to the foregoing technical solution, the transmit-end device may duplicate the basic physical layer signal in different manners to obtain a data part of the PPDU, so that flexibility of the solution is improved.

In some implementations of the first aspect or the second aspect, modulation symbols carried in the M groups of data subcarriers are binary phase shift keying (Binary Phase Shift Keying, BPSK) modulation symbols.

According to the foregoing technical solution, better effect of reducing a transmission rate of the high-frequency physical layer signal is achieved when BPSK modulation is used.

In some implementations of the first aspect or the second aspect, the data subcarriers are subcarriers other than guard subcarriers, direct current subcarriers, and pilot subcarriers among subcarriers of the high-frequency physical layer signal.

According to a third aspect, a communication apparatus is provided. The communication apparatus is configured to perform the method provided in any one of the first aspect or the implementations of the first aspect. Specifically, the communication apparatus may include a unit and/or a module (for example, a processing unit and a transceiver unit) for performing the method provided in any one of the first aspect or the implementations of the first aspect.

In an implementation, the communication apparatus is a transmit-end device. The transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in a transmit-end device. In this case, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

Specifically, the communication apparatus includes: a processing unit, configured to generate a physical layer protocol data unit PPDU, where the PPDU includes a high-frequency physical layer signal, the high-frequency physical layer signal is carried in a subcarrier of a high-frequency channel, and the high-frequency physical layer signal is obtained by duplicating a basic physical layer signal M times; and a sending unit, configured to send the PPDU to a receive-end device.

According to a fourth aspect, a communication apparatus is provided. The communication apparatus is configured to perform the method provided in any one of the second aspect or the implementations of the second aspect. Specifically, the communication apparatus may include a unit and/or a module (for example, a processing unit and a transceiver unit) for performing the method provided in any one of the second aspect or the implementations of the second aspect.

In an implementation, the communication apparatus is a receive-end device. The transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in a receive-end device. In this case, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

Specifically, the communication apparatus includes: a receiving unit, configured to receive a physical layer protocol data unit PPDU from a transmit-end device; and a processing unit, configured to demodulate the PPDU, where the PPDU includes a high-frequency physical layer signal, the high-frequency physical layer signal is carried in a subcarrier of a high-frequency channel, and the high-frequency physical layer signal is obtained by duplicating a basic physical layer signal M times.

In some implementations of the third aspect or the fourth aspect, a carrier spacing between subcarriers included in the high-frequency channel is N times a carrier spacing between subcarriers included in a low-frequency channel, and N is greater than 1.

In some implementations of the third aspect or the fourth aspect, M is related to at least one of the following parameters: bandwidth of the high-frequency physical layer signal, a low-frequency signal mode corresponding to the high-frequency physical layer signal, or a preset target transmission rate of the PPDU.

In some implementations of the third aspect or the fourth aspect, the bandwidth of the high-frequency physical layer signal is 2 GHz, and M is 32; or the bandwidth of the high-frequency physical layer signal is 500 MHz, and M is 6; or the bandwidth of the high-frequency physical layer signal is 320 MHz, and M is 4.

In some implementations of the third aspect or the fourth aspect, the PPDU further includes a preamble part, and the preamble part is obtained by duplicating an orthogonal frequency division multiplexing OFDM symbol M times.

In some implementations of the third aspect or the fourth aspect, that the high-frequency physical layer signal is obtained by duplicating a basic physical layer signal M times includes: The high-frequency physical layer signal is generated based on at least modulation symbols carried in M groups of data subcarriers, each group of the M groups of data subcarriers includes P data subcarriers, and the basic physical layer signal includes modulation symbols carried in P data subcarriers.

In some implementations of the third aspect or the fourth aspect, that the high-frequency physical layer signal is obtained by duplicating a basic physical layer signal M times includes: The high-frequency physical layer signal is obtained by duplicating the basic physical layer signal M times based on a sequence, and the sequence includes M elements or M-1 elements.

In some implementations of the third aspect or the fourth aspect, the basic physical layer signal is modulation symbols carried in a group of data subcarriers, and the high-frequency physical layer signal is generated based on the modulation symbols carried in the M groups of data subcarriers, where modulation symbols carried in a $1^{st}$ group of data subcarriers to an $M^{th}$ group of data subcarriers among the M groups of data subcarriers are obtained based on the sequence and modulation symbols carried in a group of data subcarriers, and the sequence includes M elements.

In an implementation, the modulation symbols carried in a group of data subcarriers are modulation symbols carried in the $1^{st}$ group of data subcarriers among the M groups of data subcarriers.

Alternatively, the basic physical layer signal is modulation symbols carried in a $1^{st}$ group of data subcarriers among the M groups of data subcarriers corresponding to the high-frequency physical layer signal, modulation symbols carried in a $2^{nd}$ group of data subcarriers to an $M^{th}$ group of data subcarriers among the M groups of data subcarriers are obtained by duplicating, based on the sequence, the modulation symbols carried in the $1^{st}$ group of data subcarriers, and the sequence includes M-1 elements.

In some implementations of the third aspect or the fourth aspect, the bandwidth of the high-frequency physical layer signal is 500 MHz, M is 6, P is 8, and the sequence is [1 1 1 -1 1 -1] or [1 1 -1 1 -1]; or the bandwidth of the high-frequency physical layer signal is 2 GHz, M is 32, P is 7, and the sequence is [1 1 -1 1 -1 1 1 -1 1 -1 1 1 1 1 1 -1 1 -1 -1 1 1 1 1 1 -1 -1 1 1 1 -1 -1 1 1 -1 -1] or [1 -1 1 -1 1 1 -1 1 -1 1 1 1 1 -1 1 -1 -1 1 1 1 1 1 -1 -1 1 1 1 -1 -1 1 1 -1 -1].

In some implementations of the third aspect or the fourth aspect, that the high-frequency physical layer signal is obtained by duplicating a basic physical layer signal M times includes: The high-frequency physical layer signal is obtained by duplicating the basic physical layer signal M times based on a matrix, and the matrix includes P×M elements or P×(M-1) elements.

In some implementations of the third aspect or the fourth aspect, the basic physical layer signal is modulation symbols carried in a group of data subcarriers, and the high-frequency physical layer signal is generated based on the modulation symbols carried in the M groups of data subcarriers, where modulation symbols carried in a $1^{st}$ group of data subcarriers to an $M^{th}$ group of data subcarriers among the M groups of data subcarriers are obtained based on the matrix and modulation symbols carried in a group of data subcarriers, and the matrix includes P×M elements.

In an implementation, the modulation symbols carried in a group of data subcarriers are modulation symbols carried in the $1^{st}$ group of data subcarriers among the M groups of data subcarriers.

Alternatively, the basic physical layer signal is modulation symbols carried in a $1^{st}$ group of data subcarriers among the M groups of data subcarriers corresponding to the high-frequency physical layer signal, modulation symbols carried in a $2^{nd}$ group of data subcarriers to an $M^{th}$ group of data subcarriers among the M groups of data subcarriers are obtained by duplicating, based on the matrix, the modulation symbols carried in the $1^{st}$ group of data subcarriers, and the matrix includes P×(M-1) elements.

In some implementations of the third aspect or the fourth aspect, the bandwidth of the high-frequency physical layer signal is 500 MHz, M is 6, P is 8, and the matrix is as follows:

$$\begin{bmatrix} 1 & 1 & 1 & 1 & -1 & -1 \\ 1 & 1 & -1 & 1 & 1 & -1 \\ 1 & -1 & -1 & 1 & 1 & -1 \\ 1 & 1 & -1 & -1 & -1 & -1 \\ 1 & -1 & 1 & -1 & -1 & -1 \\ 1 & -1 & 1 & 1 & -1 & 1 \\ 1 & 1 & 1 & 1 & 1 & 1 \\ 1 & -1 & -1 & 1 & 1 & -1 \end{bmatrix} \text{ or } \begin{bmatrix} 1 & 1 & 1 & -1 & -1 \\ 1 & -1 & 1 & 1 & -1 \\ -1 & -1 & 1 & 1 & -1 \\ 1 & -1 & -1 & -1 & -1 \\ -1 & 1 & -1 & -1 & -1 \\ -1 & 1 & 1 & -1 & 1 \\ 1 & 1 & 1 & 1 & 1 \\ -1 & -1 & 1 & 1 & -1 \end{bmatrix};$$

or

the bandwidth of the high-frequency physical layer signal is 2 GHz, M is 32, P is 7, and the matrix is as follows:

$$\begin{bmatrix} 1 & 1 & -1 & -1 & 1 & -1 & 1 & 1 & -1 & 1 & 1 & -1 & -1 & 1 & 1 & 1 & 1 & -1 & 1 & -1 & -1 & 1 & 1 & 1 & -1 & -1 & 1 & -1 & 1 & 1 & -1 & -1 \\ 1 & -1 & -1 & -1 & -1 & -1 & -1 & -1 & 1 & -1 & -1 & 1 & -1 & -1 & -1 & 1 & 1 & -1 & -1 & -1 & -1 & -1 & -1 & 1 & -1 & 1 & -1 & -1 & -1 & -1 & -1 & -1 \\ 1 & -1 & -1 & -1 & -1 & -1 & 1 & -1 & -1 & -1 & 1 & -1 & 1 & 1 & 1 & -1 & -1 & 1 & -1 & 1 & 1 & 1 & 1 & 1 & -1 & -1 & 1 & -1 & 1 & -1 & 1 & 1 \\ 1 & -1 & 1 & 1 & 1 & -1 & 1 & 1 & -1 & -1 & -1 & -1 & -1 & 1 & -1 & -1 & -1 & 1 & -1 & 1 & 1 & 1 & -1 & 1 & -1 & 1 & -1 & -1 & 1 & -1 & 1 \\ 1 & 1 & -1 & -1 & 1 & 1 & -1 & 1 & -1 & 1 & -1 & -1 & -1 & 1 & 1 & 1 & 1 & -1 & -1 & -1 & -1 & -1 & -1 & -1 & 1 & 1 & 1 & -1 & -1 & -1 & 1 & -1 \\ 1 & 1 & -1 & 1 & -1 & -1 & 1 & -1 & 1 & -1 & -1 & 1 & -1 & -1 & -1 & -1 & -1 & 1 & 1 & 1 & 1 & 1 & -1 & -1 & 1 & 1 & 1 & -1 & -1 & -1 & 1 & 1 \\ 1 & 1 & 1 & -1 & -1 & 1 & -1 & -1 & -1 & -1 & -1 & 1 & 1 & -1 & 1 & 1 & -1 & 1 & 1 & 1 & -1 & 1 & -1 & 1 & 1 & 1 & 1 & -1 & -1 & -1 & 1 & -1 \end{bmatrix};$$

or

$$\begin{bmatrix} 1 & -1 & -1 & 1 & -1 & 1 & 1 & -1 & 1 & 1 & -1 & -1 & 1 & 1 & 1 & 1 & -1 & 1 & -1 & -1 & 1 & 1 & 1 & -1 & -1 & 1 & -1 & 1 & 1 & -1 & -1 \\ -1 & -1 & -1 & -1 & -1 & -1 & -1 & 1 & -1 & -1 & 1 & -1 & -1 & -1 & 1 & 1 & -1 & -1 & -1 & -1 & -1 & -1 & 1 & -1 & 1 & -1 & -1 & -1 & -1 & -1 & -1 \\ -1 & -1 & -1 & -1 & 1 & -1 & -1 & -1 & 1 & -1 & 1 & 1 & 1 & 1 & -1 & -1 & 1 & -1 & 1 & 1 & 1 & 1 & 1 & -1 & -1 & 1 & -1 & 1 & -1 & 1 & 1 \\ -1 & 1 & 1 & 1 & -1 & 1 & 1 & -1 & -1 & -1 & -1 & -1 & 1 & -1 & -1 & -1 & 1 & -1 & 1 & -1 & 1 & 1 & -1 & 1 & -1 & 1 & -1 & -1 & 1 & -1 & 1 \\ 1 & -1 & -1 & 1 & 1 & -1 & 1 & -1 & 1 & -1 & -1 & -1 & 1 & 1 & 1 & 1 & -1 & -1 & -1 & -1 & -1 & -1 & -1 & 1 & 1 & 1 & -1 & -1 & -1 & 1 & -1 \\ 1 & -1 & 1 & -1 & -1 & 1 & -1 & 1 & -1 & -1 & 1 & -1 & -1 & -1 & -1 & -1 & 1 & 1 & 1 & 1 & 1 & -1 & -1 & 1 & 1 & 1 & -1 & -1 & -1 & 1 & 1 \\ 1 & 1 & -1 & -1 & 1 & -1 & -1 & -1 & -1 & -1 & 1 & 1 & -1 & 1 & 1 & -1 & 1 & 1 & 1 & -1 & 1 & -1 & 1 & 1 & 1 & 1 & -1 & -1 & -1 & 1 & -1 \end{bmatrix}.$$

In some implementations of the third aspect or the fourth aspect, that the high-frequency physical layer signal is obtained by duplicating a basic physical layer signal M times includes:
The high-frequency physical layer signal is obtained by duplicating the basic physical layer signal M times based on a duplication mode, and the duplication mode includes at least one of the following: performing symbol negation on a modulation symbol carried in an even-numbered subcarrier, and keeping a modulation symbol carried in an odd-numbered subcarrier unchanged; or performing symbol negation on a modulation symbol carried in an odd-numbered subcarrier, and keeping a modulation symbol carried in an even-numbered subcarrier unchanged; or duplicating modulation symbols carried in all subcarriers; or performing symbol negation on modulation symbols carried in all subcarriers.

In some implementations of the third aspect or the fourth aspect, the basic physical layer signal is modulation symbols carried in a group of data subcarriers, and the high-frequency physical layer signal is generated based on the modulation symbols carried in the M groups of data subcarriers, where modulation symbols carried in a $1^{st}$ group of data subcarriers to an $M^{th}$ group of data subcarriers among the M groups of data subcarriers are obtained by duplicating, M times based on the duplication mode, modulation symbols carried in a group of data subcarriers.

In an implementation, the modulation symbols carried in a group of data subcarriers are modulation symbols carried in the $1^{st}$ group of data subcarriers among the M groups of data subcarriers.

Alternatively, the basic physical layer signal is modulation symbols carried in a $1^{st}$ group of data subcarriers among the M groups of data subcarriers corresponding to the high-frequency physical layer signal, and modulation symbols carried in a $2^{nd}$ group of data subcarriers to an $M^{th}$ group of data subcarriers among the M groups of data subcarriers are obtained by duplicating, M-1 times based on the duplication mode, the modulation symbols carried in the $1^{st}$ group of data subcarriers.

In some implementations of the third aspect or the fourth aspect, when the bandwidth of the high-frequency physical layer signal is 320 M, M is 4, and a total quantity of the data subcarriers is 52, the duplication mode includes:

duplicating modulation symbols carried in data subcarriers in the $1^{st}$ group of data subcarriers, and performing symbol negation on a modulation symbol carried in an even-numbered data subcarrier, to obtain modulation symbols carried in the $2^{nd}$ group of data subcarriers; duplicating the modulation symbols carried in the data subcarriers in the $1^{st}$ group of data subcarriers, and performing symbol negation on modulation symbols carried in 13 data subcarriers, to obtain modulation symbols carried in a $3^{rd}$ group of data subcarriers; and duplicating modulation symbols carried in data subcarriers in the $2^{nd}$ group of data subcarriers, to obtain modulation symbols of a $4^{th}$ group of data subcarriers.

In some implementations of the third aspect or the fourth aspect, the $2^{nd}$ group of data subcarriers to the $M^{th}$ group of data subcarriers correspond to different duplication modes.

In some implementations of the third aspect or the fourth aspect, modulation symbols carried in the M groups of data subcarriers are BPSK modulation symbols.

In some implementations of the third aspect or the fourth aspect, the data subcarriers further include another data subcarrier different from the M groups of data subcarriers, and any BPSK modulation may be performed on the another data subcarrier.

In some implementations of the third aspect or the fourth aspect, the data subcarriers are subcarriers other than guard subcarriers, direct current subcarriers, and pilot subcarriers among subcarriers of the high-frequency physical layer signal.

In some implementations of the third aspect or the fourth aspect, that the high-frequency physical layer signal is obtained by duplicating a basic physical layer signal M times includes: The high-frequency physical layer signal is obtained by duplicating the basic physical layer signal M times based on an extension sequence, where the basic physical layer signal is a signal obtained through binary convolutional code BCC encoding, and the extension sequence includes M elements.

In some implementations of the third aspect or the fourth aspect, when M is 4, the extension sequence is [1 0 0 1].

For technical effect of the method shown in the third aspect or the fourth aspect and the possible designs of the third aspect or the fourth aspect, refer to the technical effect of the first aspect and the possible designs of the first aspect.

According to a fifth aspect, this application provides a processor, configured to perform the method provided in the first aspect or the second aspect.

Sending, obtaining/receiving, and other operations related to the processor may be understood as output, receiving/input, and other operations of the processor, or sending and receiving operations performed by a radio frequency circuit and an antenna, unless otherwise specified or the operations conflict with actual functions or internal logic of the operations in related descriptions. This is not limited in this application.

According to a sixth aspect, a computer-readable storage medium is provided. The computer-readable storage medium stores a computer program. When the computer program is run on a communication apparatus, the communication apparatus is enabled to perform the method according to any one of the implementations of the first aspect or the second aspect.

According to a seventh aspect, a computer program product including instructions is provided. When the computer program product is run on a computer, the computer is enabled to perform the method provided in any one of the implementations of the first aspect or the second aspect.

According to an eighth aspect, a chip is provided. The chip includes a processor and a communication interface. The processor reads, through the communication interface, instructions stored in a memory, to perform the method provided in any one of the implementations of the first aspect or the second aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method provided in any one of the implementations of the first aspect or the second aspect.

According to a ninth aspect, a communication system is provided, including the communication apparatus according to the third aspect and the communication apparatus according to the fourth aspect.

**BRIEF DESCRIPTION OF DRAWINGS**

FIG. 1 is a diagram of a communication system to which a method according to an embodiment of this application is applicable;
(a) to (d) in FIG. 2 show several different PPDU frame formats;
FIG. 3 is a schematic flowchart of a communication method according to an embodiment of this application;
FIG. 4 is a diagram of a process of generating an OFDM symbol;
FIG. 5 is a diagram of a process of generating a preamble part of a PPDU;
FIG. 6 is a diagram of a process of generating a high-frequency physical layer signal;

FIG. 7 is a diagram of another process of generating a high-frequency physical layer signal;

FIG. 8 is a diagram of obtaining a high-frequency physical layer signal by duplicating a basic physical layer signal M times according to an embodiment of this application;

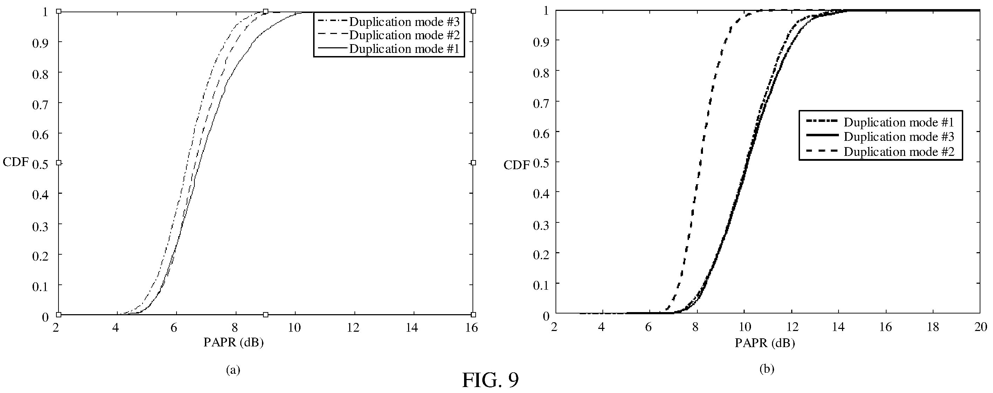

(a) and (b) in FIG. 9 show PAPRs corresponding to different duplication modes;

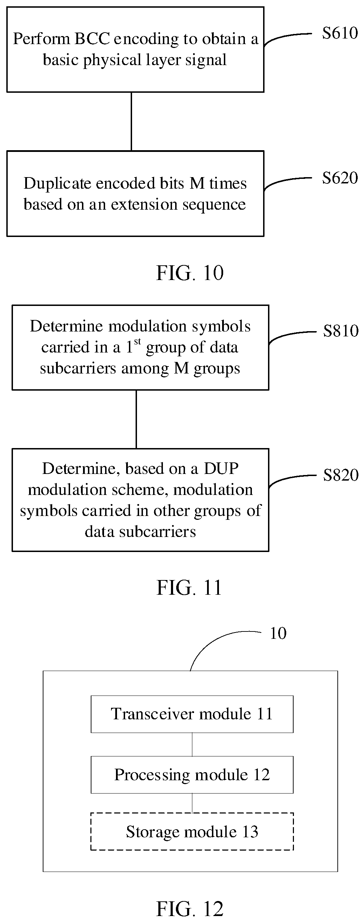

FIG. 10 is another diagram of obtaining a high-frequency physical layer signal by duplicating a basic physical layer signal M times according to an embodiment of this application;

FIG. 11 is still another diagram of obtaining a high-frequency physical layer signal by duplicating a basic physical layer signal M times according to an embodiment of this application;

FIG. 12 is a block diagram of a communication apparatus 10 according to an embodiment of this application;

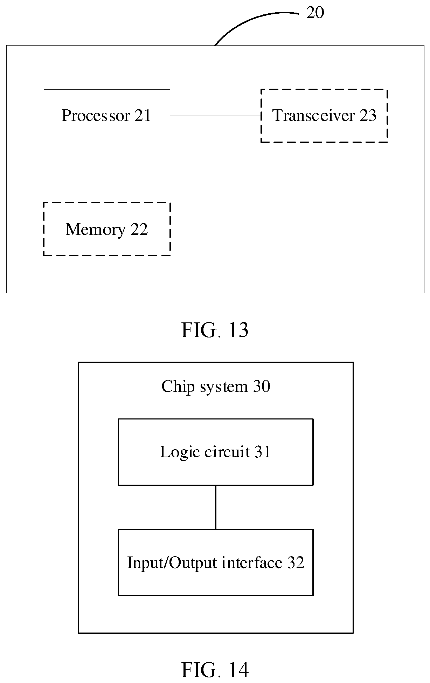

FIG. 13 is a diagram of another communication apparatus 20 according to an embodiment of this application; and

FIG. 14 is a diagram of a chip system 30 according to an embodiment of this application.

## DESCRIPTION OF EMBODIMENTS

The following describes technical solutions in embodiments of this application with reference to accompanying drawings.

A communication method provided in embodiments of this application may be applied to a wireless communication system in which a transmit-end device communicates with a receive-end device. Specifically, the transmit-end device generates a physical layer protocol data unit (Physical Layer Protocol Data Unit, PPDU), and sends the PPDU to the receive-end device through a high-frequency channel.

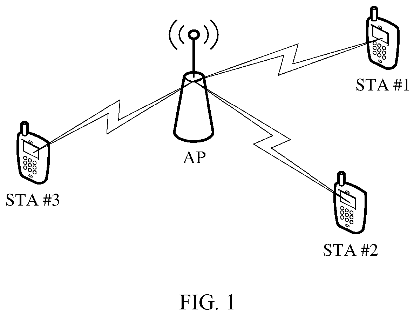

For example, the wireless communication system may be a Wi-Fi wireless communication system. As shown in FIG. 1, the Wi-Fi wireless communication system includes one or more access points (Access Point, AP) and one or more stations (station, STA) (also referred to as a non-AP station (non-AP station, non-AP STA)). In FIG. 1, communication between one AP (an AP shown in FIG. 1) and three STAs (a STA #1, a STA #2, and a STA #3 shown in FIG. 1) is used as an example. The transmit-end device in embodiments of this application may be an AP or a non-AP STA, and the receive-end device may also be an AP or a non-AP STA. For example, when the transmit-end device may be an AP, the receive-end device is a non-AP STA. For another example, when the transmit-end device may be a non-AP STA, the receive-end device is an AP. To be specific, a device in the Wi-Fi wireless communication system may serve as both a transmit-end device and a receive-end device.

For example, in embodiments of this application, both the AP and the non-AP STA include but are not limited to a server, a router, a switch, a bridge, a computer, a mobile phone, and other devices.

As an example rather than a limitation, the AP may be an access point for a terminal device (for example, a mobile phone) to access a wired (or wireless) network, and is mainly deployed in a home, a building, or a campus, with a typical coverage radius ranging from tens of meters to hundreds of meters, or certainly, may be deployed outdoors. The AP is equivalent to a bridge connecting a wired network and a wireless network, and is mainly intended to connect wireless network clients together, and then connect the wireless network to Ethernet.

As an example rather than a limitation, the non-AP STA may be a wireless communication chip, a wireless sensor, a wireless communication terminal, or the like, and may also be referred to as a user. For example, the non-AP STA may be a mobile phone supporting a Wi-Fi communication function, a tablet computer supporting a Wi-Fi communication function, a set-top box supporting a Wi-Fi communication function, a smart television supporting a Wi-Fi communication function, an intelligent wearable device supporting a Wi-Fi communication function, a vehicle-mounted communication device supporting a Wi-Fi communication function, or a computer supporting a Wi-Fi communication function.

For example, the AP and the non-AP STA may be devices used in vehicle-to-everything, internet of things (internet of things, IoT) nodes, sensors, or the like in an internet of things, smart cameras, smart remote controls, or smart water or electricity meters in a smart home, or sensors in a smart city.

For another example, the AP and the non-AP STA may be devices supporting a next-generation standard (for example, ultra high reliability (Ultra High reliability, UHR)) of 802.11be.

It should be understood that the technical solutions in embodiments of this application are applicable to not only communication between an AP and one or more non-AP STAs, but also mutual communication between APs and mutual communication between non-AP STAs. For ease of description, embodiments of this application are described only by using an example in which an AP communicates with one or more non-AP STAs. However, this description manner does not constitute any limitation on an actual application scope of the technical solutions in embodiments of this application. This is uniformly described herein, and details are not described below again.

From 802.11a/g to 802.11n, 802.11ac, 802.11ax, and the latest 802.11be for a WLAN, used frequencies are extended from 2.4G only to 2.4G/5G and then to 2.4G/5G/6G at present, and supported bandwidth is extended from 20 MHz to 320 MHz. Spectral efficiency and a throughput are continuously improved. In a next-generation WLAN technology (for example, UHR), a physical layer capability is to be further improved, and introduction of a millimeter band, for example, 45 GHz or 60 GHz, is one of important considerations.

For low-band communication at 2.4 GHz, 5 GHz, or 6 GHz, an omnidirectional wide beam is usually used. For high-band communication at 45 GHz or 60 GHz, a directional narrow beam is usually used for communication. Therefore, a dedicated beam search and alignment process, to be specific, a process of aligning a direction of a transmit beam of a transmit end with a direction of a receive beam of a receive end, needs to be performed in high-band communication. A process of aligning a direction of a transmit beam with a direction of a receive beam includes:

First, the receive end performs receiving through an omnidirectional beam (or an approximate omnidirectional beam), the transmit end sequentially sends sounding signals through transmit beams in all directions, and the receive end receives the transmit beams in all directions, selects a transmit beam with best signal quality, and notifies the transmit end.

Second, the transmit end sends a sounding signal through a transmit beam with best signal quality, and the receive end sequentially receives the sounding signal through receive beams in all directions, and selects a receive beam with best signal quality.

During beam search, when an omnidirectional beam is used on a side of a transmit end or a receive end, and a directional beam is used on the other side, a signal-to-noise ratio of a transmitted signal needs to be low (for example, the signal-to-noise ratio is far lower than a signal-to-noise ratio in a case in which directional beams are used at both a transmit end and a receive end). An association relationship between a signal-to-noise ratio of a signal and a transmission rate of the signal is considered. An example is as follows:

$C=B \log_2(1+S/N)b/s$, where C is a transmission rate of a signal, B is bandwidth of a channel, S is average power of signals transmitted in the channel, N is Gaussian noise power in the channel, and S/N is a signal-to-noise ratio. It can be learned from the foregoing formula that a higher signal-to-noise ratio in a channel indicates a higher transmission rate of a signal, and contrarily, a lower transmission rate of a signal indicates a lower signal-to-noise ratio.

Therefore, a transmission rate of a signal may be adjusted to adjust a signal-to-noise ratio of the signal. In this application, the following describes in detail how to design a signal mode for a high-frequency signal, to reduce a transmission rate of the high-frequency signal, so that the high-frequency signal adapts to transmission in a communication scenario with a low signal-to-noise ratio.

For ease of understanding embodiments of this application, several basic concepts in embodiments of this application are briefly described. It should be understood that basic concepts below are briefly described by using basic concepts specified in a WLAN protocol as examples, but embodiments of this application are not necessarily applicable only to a WLAN system. Therefore, standard names appearing when a WLAN system is used as an example for description are all functional descriptions, and specific names are not limited, but indicate only functions of a device, and may be correspondingly extended to other systems, for example, an NR system or a future communication system.

1. PPDU frame structure: A PPDU frame structure in this application usually includes a preamble (Preamble) part and a data (Data) part. A physical layer signal is sent by using a PPDU. In different WLAN protocols, a PPDU frame structure varies to some extent. Optionally, the PPDU frame structure in this application includes but is not limited to the following types:

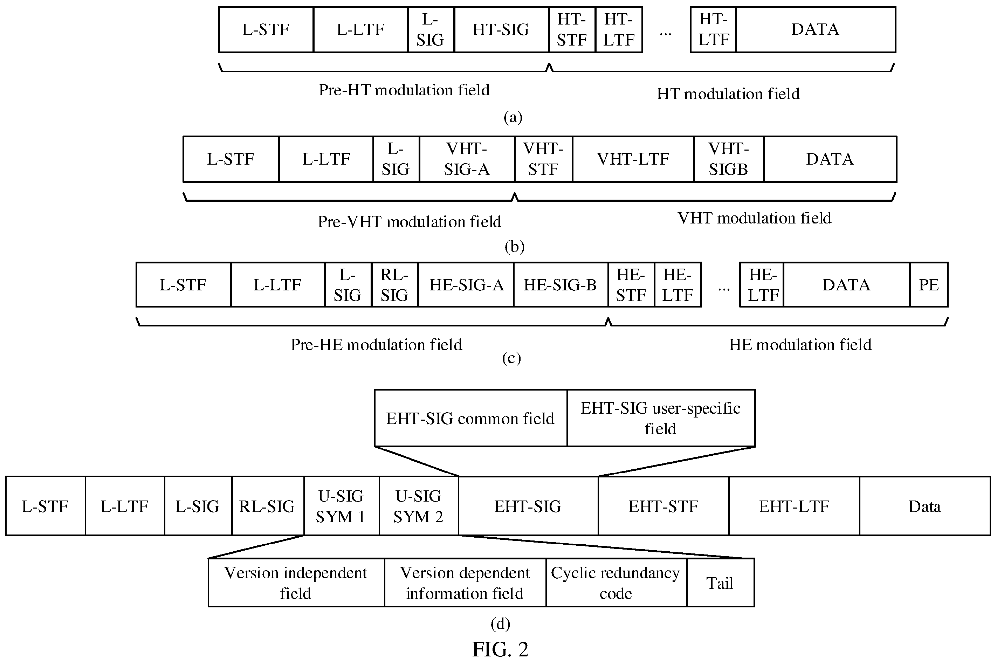

(1) A PPDU frame structure in a high throughput (High Throughput, HT) mode defined in the 802.11n standard: As shown in (a) in FIG. 2, a PPDU in the HT mode may be divided into two parts: a preamble part and a data part.

One part is a preamble part in which a modulation scheme of a legacy frame is used, referred to as a pre-HT field and including a legacy preamble (for example, L-STF or L-LTF), a legacy signal (for example, L-SIG), and a high throughput signal field (High Throughput Signal Field, HT-SIG). The preamble part further includes a part in which HT modulation is used, referred to as an HT field and including a high throughput short training field (High Throughput Short Training Field, HT-STF) and a high throughput long training field (High Throughput Long Training Field, HT-LTF).

The other part is a data part in which HT modulation is used, referred to as a data field (Data).

(2) A PPDU frame structure in a very high throughput (Very High Throughput, VHT) mode defined in the 802.11 ac standard: As shown in (b) in FIG. 2, a PPDU in the VHT mode may be divided into two parts.

One part is a preamble part in which a modulation scheme of a legacy frame is used, referred to as a pre-VHT field and including a legacy preamble (for example, L-STF or L-LTF), a legacy signal (for example, L-SIG), and a very high throughput signal field A (Very High Throughput Signal Field A, VHT-SIG-A). The preamble part further includes a part in which VHT modulation is used, referred to as a VHT field and including a very high throughput short training field (Very High Throughput Short Training Field, VHT-STF), a very high throughput long training field (Very High Throughput Long Training Field, VHT-LTF), and a very high throughput signal field B (Very High Throughput Signal Field B, VHT-SIG-B).

The other part is a data part in which VHT modulation is used, referred to as a data field (Data).

(3) A PPDU frame structure in a high efficiency (High Efficiency, HE) mode defined in the 802.11ax standard: As shown in (c) in FIG. 2, a PPDU in the HE mode may be divided into two parts.

A preamble part includes a pre-HE field. Specifically, the pre-HE field includes a legacy preamble (L-STF or L-LTF), a legacy signal (L-SIG, or Repeated Legacy-Signal Field, RL-SIG), a high efficiency throughput signal field A (HE-SIG-A, High Efficiency Signal Field A), and a high efficiency throughput signal field B (HE-SIG-B, High Efficiency Signal Field B) in the PPDU. The preamble part further includes a high efficiency throughput short training field (HE-STF, High Efficiency Short Training Field) and a very high efficiency throughput long training field (HE-LTF, High Efficiency Long Training Field).

The other part is a data part (Data).

The high efficiency throughput short training field and the very high efficiency throughput long training field of the preamble part, and the data part are referred to as an HE field.

(4) A PPDU frame structure defined in the 802.11be standard: (d) in FIG. 2 shows a frame structure of an extremely high throughput (extremely high throughput, EHT) PPDU used in 802.11be.

The EHT PPDU may be divided into two parts.

A preamble part includes a legacy preamble (legacy preamble, L-preamble) and an extremely high throughput preamble (extremely high throughput preamble, EHT-preamble).

The L-preamble part includes an L-STF field, an L-LTF field, and an L-SIG field.

The EHT-preamble part includes an RL-SIG field, a universal field (universal SIG, U-SIG) field, an extremely high throughput signal (EHT-SIG) field, an extremely high throughput short training field (extremely high throughput short training field, EHT-STF), and an extremely high throughput long training field (extremely high throughput long training field, EHT-LTF).

The U-SIG field occupies two OFDM symbols, for example, U-SIG SYM1 and U-SIG SYM2 shown in (d) in FIG. 2. The universal field (U-SIG) field may include a version independent information (version independent info) field, a version dependent information (version dependent info) field, a cyclic redundancy code (cyclic redundancy code, CRC) field, and a tail field. The version independent info field may include a 3-bit wireless fidelity (wireless fidelity, Wi-Fi) version field, a 1-bit downlink/uplink field, a BSS color field including at least 6 bits, and a transmit opportunity (transmit opportunity, TXOP) field including at least 7 bits.

Further, the version independent info field may further include a bandwidth field. The version dependent info field may include a PPDU format field and the like, and may further include one or more of a modulation and coding scheme field, a spatial flow field, a coding field, and other fields. The CRC field occupies at least 4 bits, and the tail field occupies at least a 6-bit tail bit field.

A data part includes a physical layer convergence protocol service data unit (physical layer convergence protocol service data unit, PSDU).

It can be understood that the 802.11n, the 802.11ac, the 802.11ax, and the 802.11be are all WLAN protocols based on an OFDM technology. In addition, it should be noted that the PPDU frame format in embodiments of this application is not limited to the several PPDU frame formats defined in the foregoing protocols. The foregoing several PPDU frame formats are merely examples, and do not constitute any limitation on the protection scope of this application. For example, the PPDU frame format in embodiments of this application may alternatively be a PPDU defined in a next-generation or future WLAN protocol.

2. OFDM technology: OFDM is a basic transmission mode in current wireless communication, and is widely used in wireless communication systems such as LTE, worldwide interoperability for microwave access (worldwide interoperability for microwave access, WiMAX), and Wi-Fi. In addition, the OFDM is further used in fixed network transmission, for example, in a transmission mode in which an optical fiber, a stranded copper wire, a cable, or the like is used. A basic principle of the OFDM is as follows: A to-be-sent signal is divided into N sub-signals within an allowed range based on orthogonality of subcarriers, and then N orthogonal subcarriers are modulated by using the N sub-signals respectively. Because spectra of the subcarriers overlap each other, high spectral efficiency can be achieved. In addition, in the OFDM technology, a subcarrier spacing is compressed to a minimum value. This can ensure that a plurality of parallel channels without mutual interference are formed, and can also improve frequency utilization of a system.

For example, an implementation based on the OFDM technology may include: At a transmit end, serial-to-parallel conversion and IFFT transformation are sequentially performed on a to-be-sent signal. Then parallel data is converted into serial data, and a guard period (also referred to as a "cyclic prefix") is added to the serial data to form an OFDM symbol. When clocks at the transmit end and a receive end are synchronized (if the clocks are not synchronized, clock synchronization needs to be performed first), a process of demodulating a received signal by the receive end may include: analog-to-digital conversion, serial-to-parallel conversion, cyclic prefix removal, DFT, residual frequency offset and phase noise processing (namely, pilot signal processing), channel equalization, parallel-to-serial conversion, numerical demodulation, and channel decoding. After receiving a signal, the receive end converts an analog signal into a digital signal by using an analog-to-digital converter. Similar to a case at the transmit end, one of parameters of a digital-to-analog converter is a sampling point rate or a carrier spacing.

It can be understood that, in a WLAN technology, a subcarrier of an OFDM symbol may include a guard subcarrier, a direct current subcarrier, a data subcarrier, and a pilot subcarrier. The guard subcarriers and the direct current subcarriers do not carry a signal. This may also be considered as that values of signals carried in the guard subcarriers and the direct current subcarriers are 0. The data subcarrier is used to carry payload information. The pilot subcarrier is used to carry a pilot signal. A value of the pilot signal is usually 1 or -1, and the pilot signal is used to estimate a residual frequency offset and phase noise.

3. Peak-to-average power ratio (peak-to-average power ratio, PAPR): For a signal sequence, the PAPR is a ratio of instantaneous peak power of a signal to average signal power, and may be expressed by using the following formula:

$$\mathrm{PARP} = 10 \cdot \log_{10}\left(\frac{max(x_i^2)}{mean(x_i^2)}\right),$$

where

$x_i$ represents a time-domain discrete value of a signal in the signal sequence, $max(x_i^2)$ represents a maximum value of a square of the time-domain discrete value in the signal sequence, namely, instantaneous peak power of the signal, and $mean(x_i^2)$ represents an average value of the square of the time-domain discrete value, namely, average signal power.

An OFDM signal includes a plurality of subcarrier signals. The subcarrier signals are independently modulated by using different modulation symbols. Compared with a conventional constant envelope modulation scheme, OFDM modulation has a quite high peak factor. A reason is as follows: An OFDM signal is a sum of many small signals, and phases of these small signals are determined based on a data sequence to be transmitted. For some data, these small signals may have same phases and therefore are superposed in terms of amplitudes to produce a quite large instantaneous peak amplitude. If a peak-to-average ratio is excessively large, complexity of A/D and D/A is increased, and efficiency of a radio frequency power amplifier is lowered. In addition, at a transmit end, maximum output power of an amplifier limits a peak value of a signal. This causes interference within an OFDM frequency band and between adjacent frequency bands.

To be specific, an OFDM system has a disadvantage of a high PAPR. Especially at high bandwidth, a larger quantity of subcarriers causes a higher PAPR, and a high PAPR causes nonlinear distortion of a signal and degradation of system performance. Therefore, the PAPR is an important indicator of an OFDM signal design.

4. A quantity of OFDM subcarriers: determined based on both bandwidth (or 1/sampling interval) and an OFDM symbol length (or a quantity of sampling points).

A total quantity of subcarriers is equal to bandwidth multiplied by an OFDM symbol length. For example, in 802.11, bandwidth is 20 MHz, namely, 20×1e6 Hz, and an OFDM symbol length is 3.2 μs (excluding a CP), namely, 3.2×1e-6s. The bandwidth is multiplied by the OFDM symbol length: 20×1e6×3.2×1e-6=64. 64 indicates that there are a total of 64 subcarriers.

5. Spread spectrum technology: referred to as spread spectrum communication, characterized by that bandwidth used for transmitting information is much higher than bandwidth of the information itself. In the spread spectrum communication technology, spread spectrum modulation is performed at a transmit end through spread spectrum coding, and information is received at a receive end by using a related demodulation technology. This process makes the spread spectrum communication technology have many excellent characteristics. The spread spectrum communication technology is an information transmission mode. In the spread spectrum communication technology, frequency bandwidth occupied by a signal is much higher than minimum bandwidth required for transmitting information. Band spreading is implemented through coding and modulation by using an independent code sequence, and is irrelevant to information data to be transmitted. At the receive end, related synchronous reception, despreading, and restoration of transmitted information data are performed by using a same code.

6. High-frequency physical layer signal: A high-frequency physical layer signal in this application may be understood as being obtained based on a physical layer signal carrier spacing defined in an extension protocol (for example, the 802.11n, 802.11ac, 802.11ax, or 802.11be protocol).

Specifically, for a high-frequency channel, during signal transmission, a carrier spacing corresponding to the high-frequency channel is set to N times (N>1) a carrier spacing corresponding to a low-frequency channel. To be specific, a high-frequency physical layer signal is obtained by increasing a carrier spacing of a low-frequency physical layer signal. In this way, a manner of sending the high-frequency physical layer signal is similar to a manner of sending the low-frequency physical layer signal. This reduces complexity of designing a baseband chip compatible with a high frequency and a low frequency.

It should be understood that a specific WLAN protocol that defines a physical layer signal whose carrier spacing is increased to obtain a high-frequency physical layer signal is not limited in embodiments of this application. The physical layer signal may be a physical layer signal defined in the foregoing several protocol standards for low frequency bands, or may be a physical layer signal defined in a future protocol standard for low frequency bands. Details are not described herein.

7. DUP modulation: A modulation symbol carried in a data subcarrier is duplicated. In this application, this may be understood as that modulation symbols carried in at least some data subcarriers are obtained by duplicating a modulation symbol corresponding to a basic physical layer signal.

For example, a DUP modulation scheme in 802.11be may be described as follows:

(1) For bandwidth of 80 M, the bandwidth includes 1024 subcarriers, the 1024 subcarriers include two resource units that each include 484 subcarriers, and values of signals carried in other subcarriers are set to 0. The two resource units each include 16 pilot subcarriers and 468 data subcarriers. The 468 data subcarriers are divided into two parts. A first part is 234 data subcarriers with a low frequency, and a second part is 234 data subcarriers with a high frequency. For a first part of a first resource unit, BPSK modulation is performed on 234 data subcarriers to obtain modulation symbols carried in the first part of the first resource unit. For a second part of the first resource unit, the modulation symbols carried in the 234 data subcarriers in the first part of the first resource unit are duplicated, and symbol negation is performed on modulation symbols carried in odd-numbered data subcarriers (1, 3, 5, ...).
For a first part of a second resource unit, the modulation symbols carried in the 234 data subcarriers in the first part of the first resource unit are duplicated, and modulation symbols carried in all data subcarriers are negated. For a second part of the second resource unit, modulation symbols carried in 234 data subcarriers in the second part of the first resource unit are duplicated.

(2) For bandwidth of 160 M, the bandwidth includes 2048 subcarriers, the 2048 subcarriers include two resource units that each include 996 subcarriers, and signals carried in other subcarriers are set to 0. The two resource units each include 16 pilot subcarriers and 980 data subcarriers. The 980 data subcarriers are divided into two parts. A first part is 490 data subcarriers with a low frequency, and a second part is 490 data subcarriers with a high frequency. For a first part of a first resource unit, BPSK modulation is performed on 490 data subcarriers to obtain modulation symbols carried in the first part of the first resource unit. For a second part of the first resource unit, the modulation symbols carried in the 490 data subcarriers in the first part of the first resource unit are duplicated, and symbol negation is performed on modulation symbols carried in odd-numbered data subcarriers (1, 3, 5, ...). For a first part of a second resource unit, the modulation symbols carried in the 490 data subcarriers in the first part of the first resource unit are duplicated, and modulation symbols carried in all data subcarriers are negated. For a second part of the second resource unit, modulation symbols carried in 490 data subcarriers in the second part of the first resource unit are duplicated.

(3) For bandwidth of 320 M, the bandwidth includes 4096 subcarriers, the 4096 subcarriers include four resource units that each include 996 subcarriers, and signals carried in other subcarriers are set to 0. The four resource units each include 16 pilot subcarriers and 980 data subcarriers. For a first resource unit, BPSK modulation is performed on 980 data subcarriers to obtain modulation symbols carried in a first part of the first resource unit. For a second resource unit, the modulation symbols carried in the 980 data subcarriers in the first resource unit are duplicated, and symbol negation is performed on modulation symbols carried in odd-numbered data subcarriers (1, 3, 5, ...). For a third resource unit, the modulation symbols carried in the 980 data subcarriers in the first resource unit are duplicated, and modulation symbols carried in all data subcarriers are negated. For a fourth resource unit, modulation symbols carried in 980 data subcarriers in the second resource unit are duplicated.

8. Maximum ratio combining (maximum ratio combining, MRC): a diversity reception technology intended to improve signal quality at a receive end.

A basic principle is as follows: For a same signal from a transmit end, because multi-antenna reception is performed at the receive end, the signal is received at the receive end through a plurality of paths (a plurality of antennas). There is a quite low probability that quality of all of the plurality of paths is poor at the same time. Usually, a signal in one path is better than signals in other paths. At the receive end, a specific algorithm is used to perform weighted summarization on signals in all receiving paths. A highest weight is assigned to a path with a good signal to improve a signal at the receive end. When signals in all of the plurality of paths are poor, the MRC technology can be used to obtain a good received signal.

In a scenario with a low signal-to-noise ratio in which an omnidirectional beam (or an approximate omnidirectional beam) is used on one side during high-band beam search, a control-mode signal is designed in the 802.11ad/ay protocol. A basic idea is to use a spread spectrum technology (for example, 32 times) based on a single-carrier signal to reduce a signal transmission rate to adapt to a scenario with a low signal-to-noise ratio.

However, a high-frequency physical layer signal in a next-generation WLAN protocol may be obtained by increasing a physical layer signal carrier spacing defined in a protocol (for example, the 802.11n, 802.11ac, 802.11ax, or 802.11be protocol). In terms of a signal processing manner, a single-carrier-based spread spectrum signal is greatly different from an OFDM signal defined in the 802.11n, 802.11ac, 802.11ax, or 802.11be protocol or the like. If a spread spectrum technology based on a single-carrier signal is used to reduce a signal transmission rate, this is not conducive to a chip design or implementation.

The foregoing briefly describes a problem that a method of reducing a data transmission rate by using a spread spectrum technology based on a single-carrier signal is not conducive to a chip design or implementation. To resolve a current problem that it is difficult to design and implement a chip due to a difference between a single-carrier-based spread spectrum signal and an OFDM signal, a low-rate signal mode is designed based on an OFDM signal to adapt to a transmission condition with a low signal-to-noise ratio.

Technical solutions provided in this application are described below in detail with reference to accompanying drawings. Embodiments of this application may be used in a plurality of different scenarios, including the scenario shown in FIG. 1, but not limited to the scenario.

It should be understood that a specific structure of an entity for performing a method provided in embodiments of this application is not particularly limited in the following embodiments, provided that the entity can run a program that records code of the method provided in embodiments of this application to perform communication according to the method provided in embodiments of this application. For example, the entity for performing the method provided in embodiments of this application may be a receive-end device or a transmit-end device, or a functional module that is in a receive-end device or a transmit-end device and that can invoke the program and execute the program.

Without loss of generality, interaction between a transmit-end device and a receive-end device is used below as an example to describe in detail a communication method provided in embodiments of this application. In embodiments of this application, the transmit-end device may be the foregoing AP or STA, and the receive-end device may also be the foregoing AP or STA. Details are not described herein again.

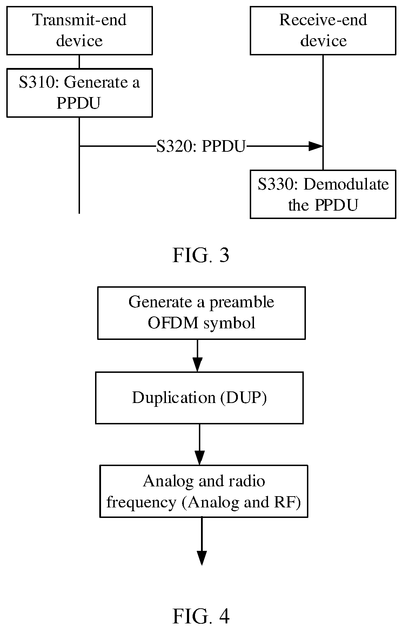

FIG. 3 is a schematic flowchart of a communication method according to an embodiment of this application. The method includes the following steps.

S310: A transmit-end device generates a PPDU.

Specifically, the PPDU includes a high-frequency physical layer signal, and the high-frequency physical layer signal is carried in a subcarrier of a high-frequency channel. For example, the high-frequency physical layer signal is a modulation symbol carried in the subcarrier of the high-frequency channel. The high-frequency physical layer signal is obtained by duplicating a basic physical layer signal M times. In this embodiment, the duplication may be understood as (duplicate, DUP).

In a possible implementation, the basic physical layer signal in this embodiment may be understood as follows: A modulation symbol that is carried in a subcarrier of the high-frequency channel and that is generated by modulating a payload (for example, a to-be-sent information bit) is used as the basic physical layer signal. The high-frequency physical layer signal is obtained by duplicating the basic physical layer signal M times (for example, is a higher-layer physical layer signal obtained through constellation mapping). For example, the basic physical layer signal includes modulation symbols carried in P subcarriers of the high-frequency channel, and the high-frequency physical layer signal includes modulation symbols carried in Q subcarriers of the high-frequency channel. Modulation symbols carried in $M \times P$ subcarriers among the Q subcarriers of the high-frequency channel are obtained by duplicating, M times, the modulation symbols carried in the P subcarriers of the high-frequency channel. Optionally, a subcarrier among the Q subcarriers of the high-frequency channel other than the $M \times P$ subcarriers may not carry information and are supplemented by any BPSK modulation symbols, and a receive end may not demodulate the BPSK modulation symbols.

To be specific, in this implementation, both the basic physical layer signal and the high-frequency physical layer signal in this embodiment may be understood as modulation symbols carried in subcarriers of the high-frequency channel. A difference lies in that the high-frequency physical layer signal is a signal obtained by duplicating the basic physical layer signal M times.

In another possible implementation, the basic physical layer signal in this embodiment may be understood as an encoded signal generated by modulating a payload (for example, a to-be-sent information bit). The high-frequency physical layer signal is obtained by duplicating the basic physical layer signal M times. For example, the basic physical layer signal includes P codewords, and the high-frequency physical layer signal includes modulation symbols, to which at least $M \times P$ codewords are mapped, that are carried in subcarriers of the high-frequency channel.

It should be understood that the foregoing two implementations are merely examples for describing a case that the high-frequency physical layer signal in this embodiment includes a signal obtained by duplicating the basic physical layer signal M times. A specific duplication mode and a specific stage, in a signal modulation process, in which an output signal is the basic physical layer signal are not limited. A signal may be duplicated in another stage in a process of modulating a payload to generate a signal suitable for transmission. Examples are not described herein.

It can be understood that duration required for first generating a basic physical layer signal for a payload and then duplicating the basic physical layer signal M times to obtain a high-frequency physical layer signal and sending the high-frequency physical layer signal is first duration. If a high-frequency physical layer signal is directly generated for the payload through modulation and sent, required duration is approximately 1/M of the first duration. Therefore, in the manner of generating a high-frequency physical layer signal in this embodiment, a transmission rate of a signal corresponding to a same payload is reduced by approximately M times. The transmission rate of the signal is reduced, so that the signal can adapt to a communication scenario with a low signal-to-noise ratio, and can be transmitted in a communication scenario with a low signal-to-noise ratio.

In this embodiment, the transmit-end device duplicates the basic physical layer signal M times. In a duplication process, a device may change signs of a plurality of values included in a basic physical layer signal (for example, in the duplication process, an actual value is multiplied by 1 or -1, the actual value being multiplied by 1 may be understood as direct duplication, and the actual value being multiplied by -1 may be understood as duplication with a sign changed). To be specific, in this embodiment, the duplicating the basic physical layer signal M times is not limited to directly repeating the basic physical layer signal, and may alternatively be duplicating the basic physical layer signal with a sign changed. A signal obtained through duplication each time may be a signal that is the same as the basic physical layer signal, or may be a signal whose sign is different from a sign of the basic physical layer signal. That the device duplicates the basic physical layer signal M times may be: using the basic physical layer signal as a group of signals, and then duplicating the basic physical layer signal M-1 times based on a duplication factor including M-1 elements, to obtain M times of the basic physical layer signal; or may be: duplicating the basic physical layer signal based on a duplication factor including M elements, to obtain M times of the basic physical layer signal. This is not limited in this embodiment of the present invention.

A process of generating the PPDU by the transmit-end device is described below with reference to specific examples. Details are not described herein.

For example, in this embodiment, a carrier spacing between subcarriers included in the high-frequency channel is N times a carrier spacing between subcarriers included in a low-frequency channel, and N is greater than 1. The high-frequency physical layer signal is a signal generated based on the carrier spacing corresponding to the high-frequency channel.

In this embodiment, the carrier spacing of the high-frequency channel carrying the signal is set to N times the carrier spacing of the low-frequency channel (N is greater than 1). To be specific, the high-frequency physical layer signal is obtained by increasing a carrier spacing of a low-frequency physical layer signal.

For example, the generating the high-frequency physical layer signal includes: obtaining a first carrier spacing, where the first carrier spacing is N times a second carrier spacing corresponding to the low-frequency channel; and performing signal modulation based on the first carrier spacing to generate the high-frequency physical layer signal.

For example, a high-frequency signal with bandwidth of 2 G is obtained by increasing a carrier spacing of a low-band signal with bandwidth of 80 M (for example, an 80-M signal defined in the 802.11ac protocol standard), or the high-frequency physical layer signal is obtained by increasing a carrier spacing of a low-band signal with bandwidth of 20 M (for example, a 20-M signal defined in the 802. 11ax/be protocol standard).

For another example, a high-frequency signal with bandwidth of 500 M is obtained by increasing a carrier spacing of a low-band signal with bandwidth of 20 M (for example, a 20-M signal defined in the 802.11n protocol standard, or a 20-M signal defined in the 802.11ac protocol standard).

For another example, a high-frequency signal with bandwidth of 320 M is obtained by increasing a carrier spacing of a low-band signal with bandwidth of 20 M (for example, a 20-M signal defined in the 802.11n protocol standard, or a 20-M signal defined in the 802.11ac protocol standard).

It should be understood that, in this embodiment, how to increase a carrier spacing of a low-frequency signal to obtain a high-frequency physical layer signal is not limited.

The foregoing high-frequency channel is a channel carrying a PPDU, and a high-frequency physical layer signal included in the PPDU is generated based on a basic physical layer signal. In addition, bandwidth of the basic physical layer signal is equal to bandwidth of the high-frequency physical layer signal generated based on the basic physical layer signal, and bandwidth of the high-frequency channel carrying the high-frequency physical layer signal is higher than or equal to the bandwidth of the basic physical layer signal.

For example, in this embodiment, a specific value of M is related to at least one of the following parameters: bandwidth of the high-frequency physical layer signal, a low-frequency signal mode corresponding to the high-frequency physical layer signal, or a preset target transmission rate of the PPDU.

For example, it is assumed that a quantity of data subcarriers in a low-frequency signal is E, BPSK modulation is used for each subcarrier, each subcarrier carries 1-bit information, and channel coding is performed by using a code rate of 1/2. Therefore, effective information in each OFDM symbol is $1/2 \times E$. If a quantity of subcarriers in the low-frequency signal is N and bandwidth of a high-frequency signal is B, an OFDM symbol length is $1/B \times N$. Therefore, an information transmission rate R Mbps is $\dfrac{1/2 \times E}{1/B \times N}$. With reference to a design of a high-frequency physical layer control (PHY control) signal in a current standard protocol (for example, 802. 11ad) that supports a high frequency, a signal transmission rate is 27.5 Mbps (an empirical value), and a signal duplication multiple M is as follows: M=R/27.5.

It should be understood that the foregoing manner of determining a value of M is merely an example, and does not constitute any limitation on the protection scope of this application. In this embodiment, a value of M may be predefined in a protocol, and the transmit-end device duplicates the basic physical layer signal based on M.

In a possible implementation, when the bandwidth of the high-frequency physical layer signal is 2 GHz, M is 32.

For example, the bandwidth of the high-frequency physical layer signal is 2 GHz, and the high-frequency physical layer signal is obtained by increasing a carrier spacing of a low-band signal with bandwidth of 80 M (for example, an 80-M signal defined in the 802.11ac protocol standard), or the high-frequency physical layer signal is obtained by increasing a carrier spacing of a low-band signal with bandwidth of 20 M (for example, a 20-M signal defined in the 802. 11ax/be protocol standard). In addition, an information transmission rate obtained by duplicating the high-frequency physical layer signal M times is 27.5 Mbps. In the foregoing calculation manner, M is 32.

In another possible implementation, when the bandwidth of the high-frequency physical layer signal is 500 MHz, M is 6.

For example, the bandwidth of the high-frequency physical layer signal is 500 MHz, and the high-frequency physical layer signal is obtained by increasing a carrier spacing of a low-band signal with bandwidth of 20 M (for example, a 20-M signal defined in the 802.11n protocol standard, or a 20-M signal defined in the 802.11ac protocol standard). In addition, an information transmission rate obtained by duplicating the high-frequency physical layer signal M times is 27.5 Mbps. In the foregoing calculation manner, M is 6.

In still another possible implementation, when the bandwidth of the high-frequency physical layer signal is 320 MHz, M is 4.

For example, the bandwidth of the high-frequency physical layer signal is 320 MHz, and the high-frequency physical layer signal is obtained by increasing a carrier spacing of a low-band signal with bandwidth of 20 M (for example, a 20-M signal defined in the 802.11n protocol standard, or a 20-M signal defined in the 802.11ac protocol standard). In addition, an information transmission rate obtained by duplicating the high-frequency physical layer signal M times is 27.5 Mbps. In the foregoing calculation manner, M is 4.

Specifically, a format of the PPDU in this embodiment may be several PPDU frame formats (for example, PPDU frame structures defined in the 802.11n, 802.11ac, 802.11ax, and 802.11be standards) described in the foregoing basic concepts, or may be other possible formats, for example, a PPDU frame format defined in a future communication protocol. This is not limited in this embodiment. It can be learned from the foregoing descriptions of the PPDU frame formats that a PPDU frame format includes a preamble part and a data part.

For example, that the PPDU includes the high-frequency physical layer signal may be understood as that the PPDU includes a data part and the data part is obtained by duplicating the basic physical layer signal M times.

Further, the PPDU includes a preamble part, and the preamble part is obtained by duplicating an OFDM symbol (referred to as a preamble OFDM symbol below for ease of differentiation) M times. The preamble OFDM symbol may be understood as a preamble part of a modulation symbol generated for a payload. In an implementation, the preamble part of the PPDU includes only duplication after the OFDM symbol is generated, and does not include duplication of a modulation symbol during generation of the OFDM symbol. In the preamble part of the PPDU, duplication is performed after the OFDM symbol is generated to reduce a transmission rate.

Specifically, generation of the PPDU includes:
The preamble part of the PPDU is generated by duplicating the preamble OFDM symbol M times, and the data part of the PPDU is generated by duplicating the basic physical layer signal M times.

In a possible implementation, each part of a PPDU frame structure includes one or more OFDM symbols. A preamble OFDM symbol may be duplicated M times by repeatedly sending each preamble OFDM symbol M-1 times. This signal duplication mode is time domain duplication. A receive-end device may directly superpose OFDM symbols. An implementation is simple, multiplexing with a low-frequency signal processing module can be maximized, and a PAPR is low.

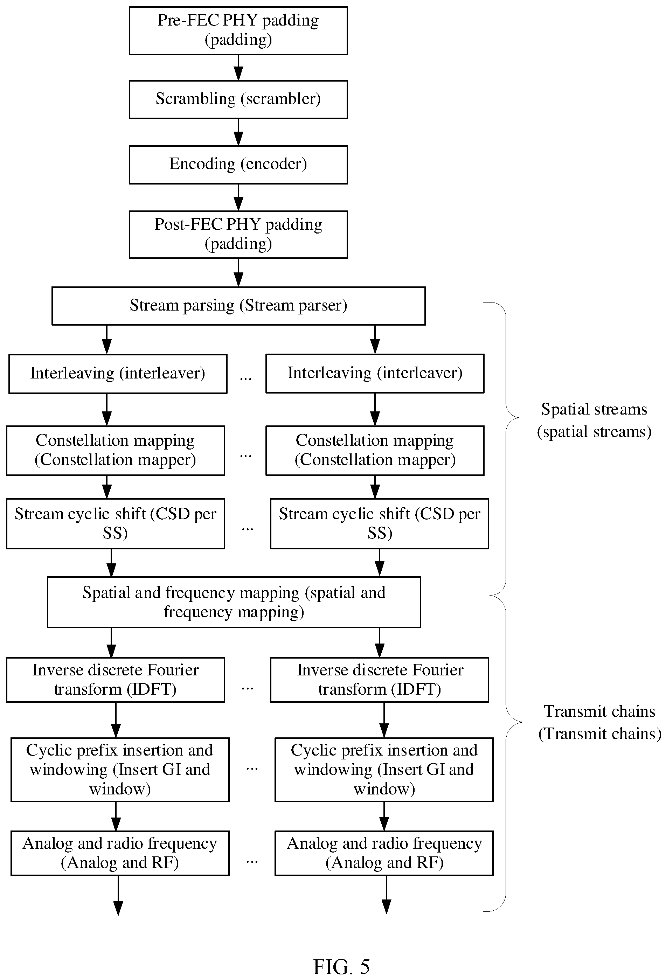

For ease of understanding, a process of duplicating a preamble OFDM symbol M times is described with reference to FIG. 4 and FIG. 5. In this embodiment, the duplicating a preamble OFDM symbol M times includes: generating a preamble OFDM symbol, duplicating the obtained preamble OFDM symbol M times to obtain a preamble part of a PPDU, and sending the preamble part. A specific process is shown in FIG. 4. FIG. 4 is a diagram of a process of generating a preamble part of a PPDU. As shown in FIG. 4, generation of the preamble part of the PPDU includes generation and duplication of a preamble OFDM symbol.

Generation of a preamble OFDM symbol is not limited in this embodiment, and includes but is not limited to a generation process shown in FIG. 5. It can be learned from FIG. 5 that generation of a preamble OFDM symbol includes: Information bits undergo scrambling, BCC encoding (encoder), stream parsing (stream parser), interleaving (interleaver), constellation mapping (constellation mapper), stream cyclic shift (CSD per SS), spatial and frequency mapping, and other processing to form a frequency domain signal. Then the frequency domain signal undergoes IDFT to form a time domain signal. Then cyclic prefix insertion and windowing (insert GI and window) are performed to form an OFDM symbol. Then the OFDM symbol is sent through an analog and radio frequency (analog and RF) circuit. A plurality of OFDM symbols constitute a PPDU.

Optionally, before forward error correction encoding (forward error correction, FEC) (pre-FEC shown in FIG. 5), a transmit end may further perform PHY padding (padding).

Optionally, after FEC (post-FEC shown in FIG. 5), the transmit end may further perform PHY padding.

It should be understood that the preamble OFDM symbol generation process shown in FIG. 5 is merely an example, and does not constitute any limitation on the protection scope of this application. A preamble OFDM symbol may alternatively be generated in another process. For example, a preamble OFDM symbol generation process does not include stream parsing, interleaving, or other steps shown in FIG. 5. For another example, a preamble OFDM symbol generation process is completely different from the process shown in FIG. 5. Details about the preamble OFDM symbol generation process are not described in this embodiment.

In a possible implementation, that the high-frequency physical layer signal (or the data part of the PPDU) is generated by duplicating the basic physical layer signal M times includes a plurality of implementations. For ease of understanding, a specific process of generating the high-frequency physical layer signal by duplicating the basic physical layer signal M times is described below with reference to specific examples. Details are not repeatedly described herein.

Further, after the transmit-end device generates the PPDU, the transmit-end device sends the PPDU to the receive-end device through the high-frequency channel. The method process shown in FIG. 3 further includes the following step.

S320: The transmit-end device sends the PPDU to the receive-end device.

Specifically, the transmit-end device sends the PPDU to the receive-end device through the high-frequency channel. A manner of sending the PPDU is not limited in this embodiment.

Further, the receive-end device demodulates the PPDU after receiving the PPDU. The method process shown in FIG. 3 further includes the following step.

S330: The receive-end device demodulates the PPDU.

It can be learned from the foregoing descriptions that the PPDU received by the receive-end device includes the high-frequency physical layer signal, the high-frequency physical layer signal is carried in the subcarrier of the high-frequency channel, and the high-frequency physical layer signal is obtained by duplicating the basic physical layer signal M times.

Specifically, in this embodiment, after receiving the PPDU generated by duplicating the basic physical layer signal M times, the receive-end device demodulates the PPDU as a received OFDM symbol. A demodulation scheme for the OFDM symbol is not described in this embodiment. For example, refer to the receive-end demodulation process shown in the OFDM technology in the foregoing basic concepts.

For example, as described in the foregoing basic concepts, signal quality at a receive end can be improved by using the maximum ratio combining technology. In this embodiment, the receive-end device may receive the PPDU by using the maximum ratio combining technology, to improve signal quality at the receive end.

That the high-frequency physical layer signal is obtained by duplicating the basic physical layer signal M times is described below in detail with reference to a manner 1 to a manner 3.

Manner 1: The high-frequency physical layer signal is a modulation symbol carried in the subcarrier of the high-frequency channel. Subcarriers of the high-frequency channel are divided into a plurality of groups of data subcarriers. The basic physical layer signal is modulation symbols carried in a group of data subcarriers. Modulation symbols in the plurality of groups of data subcarriers are obtained by duplicating, M times, modulation symbols carried in a group of data subcarriers corresponding to the basic physical layer signal.

Manner 2: The high-frequency physical layer signal is obtained by duplicating the basic physical layer signal M times based on an extension sequence. The basic physical layer signal is a signal obtained through binary convolutional code BCC encoding. The extension sequence includes M elements.

Manner 3: The high-frequency physical layer signal is a modulation symbol carried in the subcarrier of the high-frequency channel. Subcarriers of the high-frequency channel are divided into a plurality of groups of data subcarriers. After modulation symbols carried in a group of data subcarriers among the plurality of groups of data subcarriers are determined, modulation symbols carried in other groups of data subcarriers are determined based on a DUP modulation scheme. The determined modulation symbols carried in the group of data subcarriers may be understood as the basic physical layer signal.

The duplication modes shown in the manner 1 to the manner 3 may be understood as that the basic physical layer signal is first generated and then the basic physical layer signal is duplicated M times.

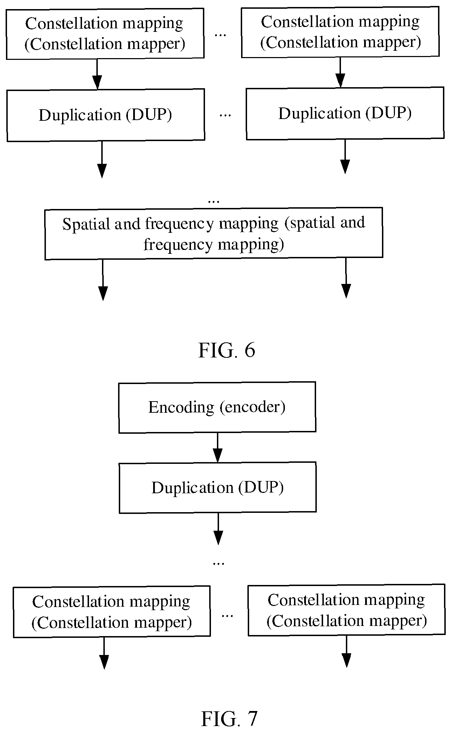

In the manner 1 and the manner 3, a duplication process may be added after the constellation mapping and before the spatial and frequency mapping in the OFDM symbol generation process shown in FIG. 5. For example, a duplication module is added to implement a carrier grouping and duplication process. FIG. 6 is a diagram of a process of generating a high-frequency physical layer signal.

Alternatively, the duplication module configured to duplicate the basic physical layer signal M times may be integrated with an existing functional module (for example, the duplication module and a constellation mapping module are integrated into one functional module to implement both a modulation function and a duplication function).

It should be understood that FIG. 6 is merely an example, and does not constitute any limitation on the protection scope of this application. In the duplication processes shown in the manner 1 and the manner 3, alternatively, a modulation symbol may be obtained in a possible OFDM symbol generation process other than the OFDM symbol generation process shown in FIG. 5 and then duplicated. Details are not described herein.

In the manner 2, a duplicating process may be added after the encoding and before the constellation mapping in the OFDM symbol generation process shown in FIG. 5. For example, a duplication module is added to duplicate encoded bits M times. FIG. 7 is a diagram of another process of generating a high-frequency physical layer signal.

It should be understood that FIG. 7 is merely an example, and does not constitute any limitation on the protection scope of this application. In the duplication process shown in the manner 2, alternatively, encoding may be performed in a possible OFDM symbol generation process other than the OFDM symbol generation process shown in FIG. 5, and then duplication is performed. Details are not described herein.

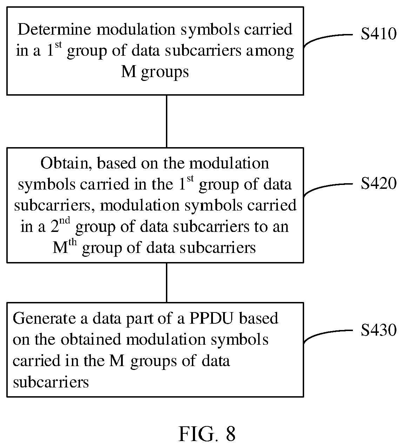

For ease of understanding, the manner 1 to the manner 3 are described below with reference to FIG. 8, FIG. 10, and FIG. 11.

The manner 1 is described with reference to FIG. 8. FIG. 8 is a diagram of obtaining a high-frequency physical layer signal by duplicating a basic physical layer signal M times according to an embodiment of this application. The following steps are included.

S410: Determine modulation symbols carried in a $1^{st}$ group of data subcarriers among M groups.

The data subcarriers include M groups of data subcarriers. Each group of the M groups of data subcarriers includes P data subcarriers. P is a quotient of a ratio of a total quantity of the data subcarriers to M.

S420: Obtain, based on the modulation symbols carried in the $1^{st}$ group of data subcarriers, modulation symbols carried in a $2^{nd}$ group of data subcarriers to an $M^{th}$ group of data subcarriers.

S430: Generate the data part of the PPDU based on the obtained modulation symbols carried in the M groups of data subcarriers.

Specifically, in the manner 1, the modulation symbols carried in the $2^{nd}$ group of data subcarriers to the $M^{th}$ group of data subcarriers are obtained in the following several possible duplication modes based on the modulation symbols carried in the $1^{st}$ group of data subcarriers.

Duplication mode #1: Modulation symbols carried in a $1^{st}$ group of data subcarriers are duplicated based on a known sequence to obtain modulation symbols carried in other groups of subcarriers. For example, the duplication mode #1 may also be referred to as sequence duplication.

Specifically, the obtaining, based on the modulation symbols carried in the $1^{st}$ group of data subcarriers, modulation symbols carried in a $2^{nd}$ group of data subcarriers to an $M^{th}$ group of data subcarriers includes: obtaining, based on a sequence and the modulation symbols carried in the $1^{st}$ group of data subcarriers, the modulation symbols carried in the $2^{nd}$ group of data subcarriers to the $M^{th}$ group of data subcarriers, where the sequence includes M-1 elements. For example, the sequence in this embodiment is a sequence that can enable a PAPR value of an obtained OFDM symbol to be small. An example in which the sequence includes M-1 elements is used to describe a process of determining the sequence. A case in which the sequence includes M elements is similar to the case in which the sequence includes M-1 elements. Details are not repeatedly described. Specifically, the M-1 elements included in the sequence may be determined through searching. During searching, PAPR values of obtained OFDM symbols that respectively correspond to different M-1 elements are determined, and M-1 elements corresponding to OFDM symbols with small PAPR values are selected as the determined sequence.

For example, all or some of sequences that each include M-1 elements are first listed. For each sequence, a median of PAPRs of 3000 OFDM symbols randomly generated based on the sequence is calculated. Finally, a sequence with a smallest median is selected as the sequence obtained through searching in this embodiment.

In another implementation of the duplication mode #1, the basic physical layer signal is modulation symbols carried in a group of data subcarriers, and the high-frequency physical layer signal is generated based on the modulation symbols carried in the M groups of data subcarriers. Modulation symbols carried in a $1^{st}$ group of data subcarriers to an $M^{th}$ group of data subcarriers among the M groups of data subcarriers are obtained by duplicating, M times based on a sequence, modulation symbols carried in a group of data subcarriers corresponding to the basic physical layer signal, and the sequence includes M elements. A case in which the sequence includes M elements is similar to the case in which the sequence includes M-1 elements. Details are not repeatedly described.

For ease of understanding, that the high-frequency physical layer signal is obtained by duplicating the basic physical layer signal M times in the duplication mode #1 is described below with reference to two specific examples.

Example 1: Bandwidth of the high-frequency physical layer signal is 500 MHz, M is 6, and P is 8.

When the bandwidth of the high-frequency physical layer signal is 500 MHz, a high-frequency signal with bandwidth of 500 MHz is obtained by increasing a carrier spacing of a low-band signal with bandwidth of 20 MHz. For example, the low-band signal corresponding to the high-frequency signal with bandwidth of 500 MHz includes a total of 64 subcarriers, and index values of the subcarriers are sequentially defined as -32:31. A subcarrier with an index value of 0 is a direct current subcarrier that carries a value 0. Subcarriers with index values of -32:-29 and 29:31 are guard subcarriers (guard tone) that carry a value 0. Subcarriers with index values of [-21, -7, 7, 21] are pilot subcarriers that carry a value +1 or -1, and are intended for estimating a phase offset caused by a residual frequency offset and phase noise. The remaining 52 data subcarriers carry a modulated signal.

A duplication process in the duplication mode #1 is as follows:

During generation of the PPDU (or OFDM symbols), BPSK modulation symbols carried in eight data subcarriers in a 1st group of data subcarriers are first generated, and then the BPSK modulation symbols carried in the eight data subcarriers are separately multiplied by five elements to obtain modulation symbols that can be carried in 40 data subcarriers. The modulation symbols that can be carried in 40 data subcarriers may be understood as modulation symbols carried in the last five groups of data subcarriers (for example, a 2nd group of data subcarriers to a 6th group of data subcarriers).

For example, a result of multiplying the BPSK modulation symbols carried in the eight data subcarriers in the 1st group of data subcarriers by a 1st element is BPSK modulation symbols carried in eight data subcarriers in the 2nd group of data subcarriers, a result of multiplying the BPSK modulation symbols carried in the eight data subcarriers in the 1st group of data subcarriers by a 2nd element is BPSK modulation symbols carried in eight data subcarriers in the 3rd group of data subcarriers, a result of multiplying the BPSK modulation symbols carried in the eight data subcarriers in the 1st group of data subcarriers by a 3rd element is BPSK modulation symbols carried in eight data subcarriers in the 4th group of data subcarriers, a result of multiplying the BPSK modulation symbols carried in the eight data subcarriers in the 1st group of data subcarriers by a 4th element is BPSK modulation symbols carried in eight data subcarriers in the 5th group of data subcarriers, and a result of multiplying the BPSK modulation symbols carried in the eight data subcarriers in the 1st group of data subcarriers by a 5th element is BPSK modulation symbols carried in eight data subcarriers in the 6th group of data subcarriers.

BPSK modulation symbols carried in 48 data subcarriers among the 52 data subcarriers are determined in the foregoing manner. The remaining four data subcarriers may not carry information and are supplemented by any BPSK modulation symbols, and the receive end may not demodulate the BPSK modulation symbols.

For the duplication process shown in the example 1, the following can be understood: For a payload, if a process of M-times duplication is not considered, a modulated signal within duration T1 is modulation symbols carried in 52 data subcarriers; or if a process of M-times duplication is considered, a modulated signal within duration T1 is modulation symbols carried in eight data subcarriers, where the modulation symbols carried in the eight data subcarriers are duplicated six times to obtain modulation symbols carried in 48 data subcarriers, the remaining four data subcarriers may not carry information and are supplemented by any BPSK modulation symbols, and the receive end may not demodulate the BPSK modulation symbols. To be specific, a modulated signal finally obtained in the case in which the process of M-times duplication is considered needs to be transmitted within at least six times the duration T1, and transmission time increases by approximately M times compared with transmission time in the case in which the process of M-times duplication is not considered. This is equivalent to that a transmission rate of a signal is reduced, so that the signal can adapt to a communication scenario with a low signal-to-noise ratio, and can be transmitted in a communication scenario with a low signal-to-noise ratio.

Example 2: Bandwidth of the high-frequency physical layer signal is 2 GHz, M is 32, and P is 7.

When the bandwidth of the high-frequency physical layer signal is 2 GHz, a high-frequency signal with bandwidth of 2 G is obtained by increasing a carrier spacing of a low-band signal with bandwidth of 80 M or a low-band signal with bandwidth of 20 M. For example, the low-band signal corresponding to the high-frequency signal with bandwidth of 2 G includes a total of 256 subcarriers, and index values of the subcarriers are sequentially defined as -128:127. A subcarrier with an index value of -1:1 is a direct current subcarrier that carries a value 0. Subcarriers with index values of -128:-123 and 123:127 are guard subcarriers (guard tone) that carry a value 0. Subcarriers with index values of [-116, -90, -48, -22, 22, 48, 90, 116] are pilot subcarriers that carry a value +1 or -1, and are intended for estimating a phase offset caused by a residual frequency offset and phase noise. The remaining 234 data subcarriers carry a modulated signal.

A duplication process in the duplication mode #1 is as follows:

A sequence including 31 elements whose element values are +1 or -1 (for example, the sequence is [1, -1, 1, -1, 1, 1, -1, 1, -1, 1, 1, 1, 1, -1, 1, -1, -1, 1, 1, 1, 1, 1, -1, -1, 1, 1, -1, -1, 1, -1, -1]) is obtained through searching. During generation of OFDM symbols, BPSK modulation symbols carried in seven data subcarriers in a 1st group of data subcarriers are first generated, and then the BPSK modulation symbols carried in the seven data subcarriers are separately multiplied by 31 elements to obtain modulation symbols that can be carried in 217 data subcarriers. The modulation symbols that can be carried in 217 data subcarriers may be understood as modulation symbols carried in the last 31 groups of data subcarriers (for example, a 2nd group of data subcarriers to a 32nd group of data subcarriers).

For example, a result of multiplying the BPSK modulation symbols carried in the seven data subcarriers in the 1st group of data subcarriers by an ith element is BPSK modulation symbols carried in seven data subcarriers in an ith group of data subcarriers, where a value of i is greater than or equal to 1 and less than or equal to 31.

In addition, it should be noted that, as described in the duplication mode #1, modulation symbols carried in a 1st group of data subcarriers are mainly duplicated M-1 times based on a known sequence to obtain modulation symbols carried in other groups of subcarriers, where the modulation symbols carried in the 1st group of data subcarriers and the modulation symbols carried in the other groups of subcarriers are the modulation symbols carried in the M groups of data subcarriers of the high-frequency physical layer signal.

**In** the duplication mode #1, the modulation symbols carried in the M groups of data subcarriers of the high-frequency physical layer signal may alternatively be obtained in another implementation: After modulation symbols carried in a 1st group of data subcarriers are determined, the modulation symbols carried in the 1st group of data subcarriers are directly duplicated M times to obtain the modulation symbols carried in the M groups of data subcarriers of the high-frequency physical layer signal. To be specific, the sequence in the duplication mode #1 may alternatively be a sequence including M elements, and a value of a 1st element among the M elements is 1.

For example, when the bandwidth of the high-frequency physical layer signal is 500 MHz, M is 6, and P is 8, the sequence is as follows:

$$[1 \ 1 \ 1 \ -1 \ 1 \ -1].$$

For another example, when the bandwidth of the high-frequency physical layer signal is 2 GHz, M is 32, and P is 7, the sequence is as follows:

$$[1 \ 1 \ -1 \ 1 \ -1 \ 1 \ 1 \ -1 \ 1 \ -1 \ 1 \ 1 \ 1 \ 1 \ -1 \ 1 \ -1 \ -1 \ 1 \ 1 \ 1 \ 1 \ 1 \ -1 \ -1 \ 1 \ 1 \ -1 \ -1 \ 1 \ -1 \ -1].$$

The duplication mode #1 may be understood as a sequence-based duplication form. The following describes a matrix-based duplication form with reference to a duplication mode #2.

Duplication mode #2: Modulation symbols carried in a 1st group of data subcarriers are duplicated based on a known matrix to obtain modulation symbols carried in other groups of subcarriers. For example, the duplication mode #2 may also be referred to as matrix duplication.

Specifically, the obtaining, based on the modulation symbols carried in the 1st group of data subcarriers, modulation symbols carried in a 2nd group of data subcarriers to an Mth group of data subcarriers includes: obtaining, based on a matrix and the modulation symbols carried in the 1st group of data subcarriers, the modulation symbols carried in the 2nd group of data subcarriers to the Mth group of data subcarriers, where the matrix includes $P \times (M-1)$ elements. For example, the matrix in this embodiment is a matrix that can enable a PAPR value of an obtained OFDM symbol to be small. An example in which the matrix includes $P \times (M-1)$ elements is used to describe a process of determining the sequence. A case in which the matrix includes $P \times M$ elements is similar to the case in which the matrix includes $P \times (M-1)$ elements. Details are not repeatedly described. Specifically, the $P \times (M-1)$ elements or the $P \times M$ elements included in the matrix may be determined through searching. During searching, PAPR values of obtained OFDM symbols that respectively correspond to different $P \times (M-1)$ elements or $P \times M$ elements are determined, and $P \times (M-1)$ elements or $P \times M$ elements corresponding to OFDM symbols with small PAPR values are selected as the determined matrix.

For example, all or some of matrices that each include $P \times (M-1)$ elements are first listed. For each matrix, a median of PAPRs of 3000 OFDM symbols randomly generated based on the matrix is calculated. Finally, a matrix with a smallest median is selected as the matrix obtained through searching in this embodiment.

In another implementation of the duplication mode #2, the basic physical layer signal is modulation symbols carried in a group of data subcarriers, and the high-frequency physical layer signal is generated based on the modulation symbols carried in M groups of data subcarriers. Modulation symbols carried in a 1st group of data subcarriers to an Mth group of data subcarriers among the M groups of data subcarriers are obtained by duplicating, M times based on a matrix, modulation symbols carried in a group of data subcarriers corresponding to the basic physical layer signal, and the matrix includes $P \times M$ elements. A case in which the matrix includes $P \times M$ elements is similar to the case in which the matrix includes $P \times (M-1)$ elements. Details are not repeatedly described.

For ease of understanding, that the high-frequency physical layer signal is obtained by duplicating the basic physical layer signal M times in the duplication mode #2 is described below with reference to two specific examples.

Example 3: Bandwidth of the high-frequency physical layer signal is 500 MHz, M is 6, and P is 8.

It can be learned from the example 1 that, when the bandwidth of the high-frequency physical layer signal is 500 MHz, a high-frequency signal with bandwidth of 500 MHz is obtained by increasing a carrier spacing of a low-band signal with bandwidth of 20 MHz.

A duplication process in the duplication mode #2 is as follows:
A matrix with eight rows and five columns is obtained through searching, and a value of each element of the matrix is +1 or -1. For example, the following matrix is obtained:

$$\begin{bmatrix} 1 & 1 & 1 & -1 & -1 \\ 1 & -1 & 1 & 1 & -1 \\ -1 & -1 & 1 & 1 & -1 \\ 1 & -1 & -1 & -1 & -1 \\ -1 & 1 & -1 & -1 & -1 \\ -1 & 1 & 1 & -1 & 1 \\ 1 & 1 & 1 & 1 & 1 \\ -1 & -1 & 1 & 1 & -1 \end{bmatrix}$$

During generation of the PPDU (or OFDM symbols), BPSK modulation symbols carried in eight data subcarriers in a 1st group of data subcarriers are first generated, and then a BPSK modulation symbol carried in one of the eight data subcarriers is separately multiplied by elements in the matrix to obtain modulation symbols that can be carried in 40 data subcarriers. The modulation symbols that can be carried in 40 data subcarriers may be understood as modulation symbols carried in the last five groups of data subcarriers (for example, a 2nd group of data subcarriers to a 6th group of data subcarriers).

For example, a BPSK modulation symbol carried in a 1st data subcarrier among the eight data subcarriers is multiplied by a 1st row of the matrix to obtain five modulation symbols, and the five modulation symbols are respectively carried in 1st data subcarriers in the last five groups of data subcarriers. Similarly, a BPSK modulation symbol carried in a 2nd data subcarrier among the eight data subcarriers is multiplied by a 2nd row of the matrix to obtain five modulation symbols, and the five modulation symbols are respectively carried in 2nd data subcarriers in the last five groups of data subcarriers, and so on. By analogy, a BPSK modulation symbol carried in an 8th data subcarrier among the eight data subcarriers is multiplied by an 8th row of the matrix to obtain five modulation symbols, and the five modulation symbols are respectively carried in 8th data subcarriers in the last five groups of data subcarriers.

Example 4: Bandwidth of the high-frequency physical layer signal is 2 GHz, M is 32, and P is 7.

It can be learned from the example 2 that, when the bandwidth of the high-frequency physical layer signal is 2 GHz, a high-frequency signal with bandwidth of 2 G is obtained by increasing a carrier spacing of a low-band signal with bandwidth of 80 M or a low-band signal with bandwidth of 20 M.

A duplication process in the duplication mode #2 is as follows:

During generation of the PPDU (or OFDM symbols), BPSK modulation symbols carried in eight data subcarriers in a 1st group of data subcarriers are first generated, and then a BPSK modulation symbol carried in one of the eight data subcarriers is separately multiplied by elements in the matrix to obtain modulation symbols that can be carried in 217 data subcarriers. The modulation symbols that can be carried in 217 data subcarriers may be understood as modulation symbols carried in the last 31 groups of data subcarriers (for example, a 2nd group of data subcarriers to a 32nd group of data subcarriers).

For example, a BPSK modulation symbol carried in a 1st data subcarrier among the eight data subcarriers is multiplied by a 1st row of the matrix to obtain 31 modulation symbols, and the 31 modulation symbols are respectively carried in 1st data subcarriers in the last 31 groups of data subcarriers. Similarly, a BPSK modulation symbol carried in a 2nd data subcarrier among the eight data subcarriers is multiplied by a 2nd row of the matrix to obtain 31 modulation symbols, and the 31 modulation symbols are respectively carried in 2nd data subcarriers in the last 31 groups of data subcarriers, and so on. By analogy, a BPSK modulation symbol carried in an 8th data subcarrier among the eight data subcarriers is multiplied by an 8th row of the matrix to obtain 31 modulation symbols, and the 31 modulation symbols are respectively carried in 8th data subcarriers in the last 31 groups of data subcarriers.

In addition, it should be noted that, as described in the duplication mode #2, modulation symbols carried in a 1st group of data subcarriers are mainly duplicated M-1 times based on a known sequence to obtain modulation symbols carried in other groups of subcarriers, where the modulation symbols carried in the 1st group of data subcarriers and the modulation symbols carried in the other groups of subcarriers are the modulation symbols carried in the M groups of data subcarriers of the high-frequency physical layer signal.

In the duplication mode #2, the modulation symbols carried in the M groups of data subcarriers of the high-frequency physical layer signal may alternatively be obtained in another implementation: After modulation symbols carried in a 1st group of data subcarriers are determined, the modulation symbols carried in the 1st group of data subcarriers are directly duplicated M times to obtain the modulation symbols carried in the M groups of data subcarriers of the high-frequency physical layer signal. To be specific, the matrix in the duplication mode #2 may alternatively be a matrix including P×M elements, and values of a 1st column of elements among the M elements are 1.

For example, when the bandwidth of the high-frequency physical layer signal is 500 MHz, M is 6, and P is 8, the matrix is as follows:

$$\begin{bmatrix} 1 & 1 & 1 & 1 & -1 & -1 \\ 1 & 1 & -1 & 1 & 1 & -1 \\ 1 & -1 & -1 & 1 & 1 & -1 \\ 1 & 1 & -1 & -1 & -1 & -1 \\ 1 & -1 & 1 & -1 & -1 & -1 \\ 1 & -1 & 1 & 1 & -1 & 1 \\ 1 & 1 & 1 & 1 & 1 & 1 \\ 1 & -1 & -1 & 1 & 1 & -1 \end{bmatrix}$$

For another example, when the bandwidth of the high-frequency physical layer signal is 2 GHz, M is 32, and P is 7, the matrix is as follows:

$$\begin{bmatrix} 1 & 1 & -1 & -1 & 1 & -1 & 1 & 1 & -1 & 1 & 1 & -1 & -1 & 1 & 1 & 1 & 1 & -1 & 1 & -1 & -1 & 1 & 1 & 1 & -1 & -1 & 1 & -1 & 1 & 1 & -1 & -1 \\ 1 & -1 & -1 & -1 & -1 & -1 & -1 & -1 & 1 & -1 & -1 & 1 & -1 & -1 & -1 & 1 & 1 & -1 & -1 & -1 & -1 & -1 & -1 & 1 & -1 & 1 & -1 & -1 & -1 & -1 & -1 & -1 \\ 1 & -1 & -1 & -1 & -1 & -1 & 1 & -1 & -1 & -1 & 1 & -1 & 1 & 1 & 1 & -1 & -1 & 1 & -1 & 1 & 1 & 1 & 1 & 1 & -1 & -1 & 1 & -1 & 1 & -1 & 1 & 1 \\ 1 & -1 & 1 & 1 & 1 & -1 & 1 & 1 & -1 & -1 & -1 & -1 & -1 & 1 & -1 & -1 & -1 & 1 & -1 & 1 & -1 & 1 & 1 & -1 & 1 & -1 & 1 & -1 & -1 & 1 & -1 & 1 \\ 1 & 1 & -1 & -1 & 1 & 1 & -1 & 1 & -1 & 1 & -1 & -1 & -1 & 1 & 1 & 1 & 1 & 1 & -1 & -1 & -1 & -1 & -1 & -1 & 1 & 1 & 1 & -1 & -1 & -1 & 1 & -1 \\ 1 & 1 & -1 & 1 & -1 & -1 & 1 & -1 & 1 & -1 & -1 & 1 & -1 & -1 & -1 & -1 & 1 & 1 & 1 & 1 & -1 & -1 & 1 & 1 & 1 & 1 & -1 & -1 & -1 & 1 & 1 & 1 \\ 1 & 1 & 1 & -1 & -1 & 1 & -1 & -1 & -1 & -1 & -1 & 1 & 1 & -1 & 1 & 1 & -1 & 1 & 1 & 1 & -1 & 1 & -1 & 1 & 1 & 1 & 1 & -1 & -1 & -1 & 1 & -1 \end{bmatrix}$$

Duplication mode #3: Modulation symbols carried in a 1st group of data subcarriers are duplicated based on a predefined duplication mode to obtain modulation symbols carried in other groups of subcarriers.

Specifically, the obtaining, based on the modulation symbols carried in the 1st group of data subcarriers, modulation symbols carried in a 2nd group of data subcarriers to an Mth group of data subcarriers includes: duplicating, M-1 times based on at least one duplication mode, the modulation symbols carried in the 1st group of data subcarriers, to obtain the modulation symbols carried in the 2nd group of data subcarriers to the Mth group of data subcarriers. For example, the duplication mode #3 may also be referred to as module duplication. In another implementation of the duplication mode #3, the basic physical layer signal is modulation symbols carried in a group of data subcarriers, and the high-frequency physical layer signal is generated based on the modulation symbols carried in M groups of data subcarriers. Modulation symbols carried in a 1st group of data subcarriers to an Mth group of data subcarriers among the M groups of data subcarriers are obtained by duplicating, M times based on the duplication mode, modulation symbols carried in a group of data subcarriers.

For example, the duplication mode includes at least one of the following:

performing symbol negation on a modulation symbol carried in an even-numbered subcarrier, and keeping a modulation symbol carried in an odd-numbered subcarrier unchanged; or
performing symbol negation on a modulation symbol carried in an odd-numbered subcarrier, and keeping a modulation symbol carried in an even-numbered subcarrier unchanged; or
duplicating modulation symbols carried in all subcarriers; or
performing symbol negation on modulation symbols carried in all subcarriers.

It should be understood that the predefined duplication mode, or a duplication mode or a duplication module used for predefined module duplication may be one or more duplication modes or duplication modules predefined in a standard.

For example, the 2nd group of data subcarriers to the Mth group of data subcarriers correspond to different duplication modes.

For ease of understanding, that the high-frequency physical layer signal is obtained by duplicating the basic physical layer signal M times in the duplication mode #3 is described below with reference to two specific examples.

Example 5: Bandwidth of the high-frequency physical layer signal is 500 MHz, M is 6, and P is 8.

It can be learned from the example 1 that, when the bandwidth of the high-frequency physical layer signal is 500 MHz, a high-frequency signal with bandwidth of 500 MHz is obtained by increasing a carrier spacing of a low-band signal with bandwidth of 20 MHz.

A duplication process in the duplication mode #3 is as follows:

Four duplication modes are defined, and indexes of the four duplication modes are #1, #2, #3, and #4 respectively. A duplication mode with the index #1 is: performing symbol negation on modulation symbols carried in all even-numbered subcarriers, and keeping a modulation symbol carried in an odd-numbered subcarrier unchanged. A duplication mode with the index #2 is: performing symbol negation on modulation symbols carried in all odd-numbered subcarriers, and keeping a modulation symbol carried in an even-numbered subcarrier unchanged. A duplication mode with the index #3 is:

duplicating modulation symbols carried in all subcarriers. A duplication mode with the index #4 is: performing symbol negation on modulation symbols carried in all subcarriers.

During generation of the PPDU (or OFDM symbols), BPSK modulation symbols carried in eight data subcarriers in a 1st group of data subcarriers are first generated, and duplication modes for duplicating the modulation symbols carried in the 1st group of data subcarriers to obtain modulation symbols carried in the last five groups of data subcarriers are determined. For example, duplication modes sequentially selected for the last five groups of subcarriers are [#4, #3, #1, #2, #1].

Example 6: Bandwidth of the high-frequency physical layer signal is 2 GHz, M is 32, and P is 7.

It can be learned from the example 2 that, when the bandwidth of the high-frequency physical layer signal is 2 GHz, a high-frequency signal with bandwidth of 2 G is obtained by increasing a carrier spacing of a low-band signal with bandwidth of 80 M or a low-band signal with bandwidth of 20 M.

A duplication process in the duplication mode #3 is as follows:

Four duplication modes are defined, and indexes of the four duplication modes are #1, #2, #3, and #4 respectively. A duplication mode with the index #1 is: performing symbol negation on modulation symbols carried in all even-numbered subcarriers, and keeping a modulation symbol carried in an odd-numbered subcarrier unchanged. A duplication mode with the index #2 is: performing symbol negation on modulation symbols carried in all odd-numbered subcarriers, and keeping a modulation symbol carried in an even-numbered subcarrier unchanged. A duplication mode with the index #3 is: duplicating modulation symbols carried in all subcarriers. A duplication mode with the index #4 is: performing symbol negation on modulation symbols carried in all subcarriers.

During generation of the PPDU (or OFDM symbols), BPSK modulation symbols carried in seven data subcarriers in a 1st group of data subcarriers are first generated, and duplication modes for duplicating the modulation symbols carried in the 1st group of data subcarriers to obtain modulation symbols carried in the last 31 groups of data subcarriers are determined. For example, duplication modes sequentially selected for the last 31 groups of subcarriers are [#1, #2, #4, #3, #1, #1, #1, #4, #4, #3, #2, #2, #3, #4, #2, #3, #1, #2, #1, #4, #1, #3, #4, #3, #2, #4, #3, #3, #4, #3, #3].

In addition, it should be noted that, as described in the duplication mode #3, modulation symbols carried in a 1st group of data subcarriers are mainly duplicated M-1 times based on a known sequence to obtain modulation symbols carried in other groups of subcarriers, where the modulation symbols carried in the 1st group of data subcarriers and the modulation symbols carried in the other groups of subcarriers are the modulation symbols carried in the M groups of data subcarriers of the high-frequency physical layer signal. In the duplication mode #3, the modulation symbols carried in the M groups of data subcarriers of the high-frequency physical layer signal may alternatively be obtained in another implementation: After modulation symbols carried in a 1st group of data subcarriers are determined, the modulation symbols carried in the 1st group of data subcarriers are directly duplicated M times to obtain the modulation symbols carried in the M groups of data subcarriers of the high-frequency physical layer signal, provided that one time of duplication other than the M-1 times of duplication is performed in the mode of "duplicating modulation symbols carried in all subcarriers".

It can be learned from the foregoing descriptions that a duplication mode in the manner 1 includes three duplication modes: the duplication mode #1, the duplication mode #2, and the duplication mode #3. For ease of understanding, differences between PAPRs corresponding to PPDUs obtained in different duplication modes are described below with reference to FIG. 9.

(a) in FIG. 9 shows PAPRs corresponding to PPDUs respectively obtained in the duplication mode #1, the duplication mode #2, and the duplication mode #3 when the bandwidth of the high-frequency physical layer signal is 500 MHz, M is 6, and P is 8. It can be learned from (a) in FIG. 9 that the duplication mode #3 has a lowest PAPR in six-times duplication.

(b) in FIG. 9 shows PAPRs corresponding to PPDUs respectively obtained in the duplication mode #1, the duplication mode #2, and the duplication mode #3 when the bandwidth of the high-frequency physical layer signal is 2 GHz, M is 32, and P is 7. It can be learned from (b) in FIG. 9 that the duplication mode #2 has a lowest PAPR in 32-times duplication.

The manner 2 is described with reference to FIG. 10. FIG. 10 is another diagram of obtaining a high-frequency physical layer signal by duplicating a basic physical layer signal M times according to an embodiment of this application. The following steps are included.

S610: Perform BCC encoding to obtain a basic physical layer signal.

S620: Duplicate encoded bits M times based on an extension sequence.

The extension sequence includes M elements. For example, when M is 4, the extension sequence is [1, 0, 0, 1].

An OFDM symbol generation process for a physical layer signal may be summarized in FIG. 4. A coding scheme supported by a protocol (for example, the 802.11n, 802.11ac, 802.11ax, or 802.11be protocol) includes LDPC (Low-density parity-check code, low-density parity-check code) and BCC (binary convolutional code, binary convolutional code). For a data part of the physical layer signal, BCC encoding is used as an example in this embodiment. Encoded bits are extended M times after encoding and before padding (padding), and an extension sequence may be any sequence. The extending the encoded bits M times after encoding and before padding (padding) may be understood as a process of duplicating the basic physical layer signal M times.

For example, four-times extension is used as an example, and a bit 1 may be extended to 1, 0, 0, 1 based on a sequence 1, 0, 0, 1.

The manner 3 is described with reference to FIG. 11. FIG. 11 is still another diagram of obtaining a high-frequency physical layer signal by duplicating a basic physical layer signal M times according to an embodiment of this application. The following steps are included.

S810: Determine modulation symbols carried in a 1st group of data subcarriers among M groups.

S820: Determine, based on a DUP modulation scheme, modulation symbols carried in other groups of data subcarriers.

When bandwidth of the high-frequency physical layer signal is 320 MHz, M is 4, and a total quantity of the data subcarriers is 52, a 2nd group of subcarriers to a 4th group of subcarriers are obtained based on the DUP modulation scheme and 13 modulation symbols. The 13 modulation symbols are modulation symbols carried in 13 data subcarriers included in the 1st group of subcarriers.

It can be learned from the DUP modulation scheme described in the foregoing basic concepts that the DUP modulation scheme specifically includes:

duplicating modulation symbols carried in data subcarriers in the 1st group of data subcarriers, and performing symbol negation on a modulation symbol carried in an even-numbered data subcarrier, to obtain modulation symbols carried in the 2nd group of data subcarriers;

duplicating the modulation symbols carried in the data subcarriers in the 1st group of data subcarriers, and performing symbol negation on the modulation symbols carried in the 13 data subcarriers, to obtain modulation symbols carried in the 3rd group of data subcarriers; and

duplicating modulation symbols carried in data subcarriers in the 2nd group of data subcarriers, to obtain modulation symbols of the 4th group of data subcarriers.

For example, a process of duplicating the basic physical layer signal M times in the manner 3 is similar to the duplication mode #3 in the manner 1. A difference lies in that a duplication mode in the manner 3 is the DUP modulation scheme specified in a current protocol and therefore the duplication mode does not need to be redefined.

For example, in this embodiment, the modulation symbols carried in the M groups of data subcarriers are BPSK modulation symbols.

For example, the data subcarriers further include another data subcarrier different from the M groups of data subcarriers, and any BPSK modulation may be performed on the another data subcarrier.

For example, any BPSK modulation may be performed on data subcarriers whose quantity is a remainder of a ratio of the total quantity of the data subcarriers to M. The data subcarriers are subcarriers other than guard subcarriers, direct current subcarriers, and pilot subcarriers among subcarriers of the high-frequency physical layer signal.

In an optional implementation, the method shown in FIG. 3 is applicable to transmission of specific types of frames, for example, a beacon frame, and is also applicable to transmission of frames in specific scenarios. This is not limited in this embodiment of the present invention. The receive end may also determine, based on a type of a frame or an identifier carried in a frame, whether a signal is duplicated M times, to determine a decoding scheme.

In the embodiment shown in FIG. 3, the transmit-end device duplicates the basic physical layer signal M times to generate the high-frequency physical layer signal, and sends the PPDU including the high-frequency physical layer signal. To be specific, the sent PPDU is obtained by duplicating the basic physical layer signal M times. It can be understood that, compared with a case in which the basic physical layer signal is directly sent, in the case in which the basic physical layer signal is duplicated M times and then sent, a rate at which the basic physical layer signal is sent can be reduced. For example, for a payload, transmission of a basic physical layer signal may be completed within first duration. However, if the basic physical layer signal is duplicated M times and then sent, required time is M times the first duration. This is equivalent to reducing a transmission rate of the basic physical layer signal M times. On the premise that the transmission rate is reduced, a high-frequency physical layer signal with a reduced rate can be transmitted in a communication scenario with a low signal-to-noise ratio.

It should be understood that the specific examples shown in FIG. 3 in embodiments of this application are merely intended to help a person skilled in the art better understand embodiments of this application, but not to limit the scope of embodiments of this application. It should be further understood that sequence numbers of the foregoing processes do not mean a sequence of performing the processes. The sequence of performing the processes should be determined based on functions and internal logic of the processes, and should not be construed as any limitation on implementation processes of embodiments of this application.

It should be further understood that, in embodiments of this application, unless otherwise specified or a logic conflict occurs, terms and/or descriptions in different embodiments are consistent and may be mutually referenced, and technical features in different embodiments may be combined into a new embodiment based on an internal logical relationship between the technical features.

It should be further understood that, in some of the foregoing embodiments, a device in an existing network architecture is mainly used as an example for description. It should be understood that a specific form of the device is not limited in embodiments of this application. For example, embodiments of this application are applicable to all future devices that can implement a same function.

It can be understood that methods and operations implemented by a device (for example, the transmit-end device or the receive-end device) in the foregoing method embodiments may alternatively be implemented by a component (for example, a chip or a circuit) of the device.

The communication method provided in embodiments of this application is described above in detail with reference to FIG. 3. The communication method is mainly described from a perspective of interaction between the transmit-end device and the receive-end device. It can be understood that, to implement the foregoing functions, the transmit-end device and the receive-end device include corresponding hardware structures and/or software modules for performing the functions.

A person skilled in the art should be able to be aware that, in combination with units and algorithm steps in the examples described in embodiments disclosed in this specification, this application can be implemented by hardware or a combination of hardware and computer software. Whether a function is performed by hardware or hardware driven by computer software depends on particular applications and design constraints of technical solutions. A person skilled in the art may use different methods to implement the described functions for each particular application, but it should not be considered that the implementation goes beyond the scope of this application.

A transmit-end device or a receive-end device provided in embodiments of this application is described below in detail with reference to FIG. 12 to FIG. 14. It should be understood that descriptions of apparatus embodiments correspond to the descriptions of the method embodiments. Therefore, for content that is not described in detail, refer to the foregoing method embodiments. For brevity, details of some content are not described herein again.

In embodiments of this application, the transmit-end device or the receive-end device may be divided into functional modules based on the foregoing method examples. For example, the functional modules may be divided based on functions, or two or more functions may be integrated into one processing module. The integrated module may be implemented in a form of hardware, or may be implemented in a form of a software functional module. It should be noted that division into the modules in embodiments of this application is an example and is merely logical function division. During actual implementation, another division manner may be used. An example in which the functional modules are divided based on the functions is used below for description.

FIG. 12 is a block diagram of a communication apparatus 10 according to an embodiment of this application. The apparatus 10 includes a transceiver module 11 and a processing module 12. The transceiver module 11 may implement a corresponding communication function. The processing module 12 is configured to perform data processing. In other words, the transceiver module 11 is configured to perform a sending/receiving-related operation, and the processing module 12 is configured to perform an operation other than sending and receiving. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, so that the apparatus implements actions of a device in the foregoing method embodiments.

In a first design, the apparatus 10 may correspond to the transmit-end device in the foregoing method embodiments, or may be a component (for example, a chip) of the transmit-end device.

The apparatus 10 may implement the steps or the processes performed by the transmit-end device in the foregoing method embodiments. The transceiver module 11 may be configured to perform a sending/receiving-related operation of the transmit-end device in the foregoing method embodiments. The processing module 12 may be configured to perform a processing-related operation of the transmit-end device in the foregoing method embodiments.

In a possible implementation, the processing module 12 is configured to generate a physical layer protocol data unit PPDU, where the PPDU includes a high-frequency physical layer signal, the high-frequency physical layer signal is carried in a subcarrier of a high-frequency channel, and the high-frequency physical layer signal is obtained by duplicating a basic physical layer signal M times; and the transceiver module 11 is configured to send the PPDU to a receive-end device.

When the apparatus 10 is configured to perform the method in FIG. 3, the transceiver module 11 may be configured to perform a step of sending information in the method, for example, step S320; and the processing module 12 may be configured to perform a processing step in the method, for example, step S310.

It should be understood that specific processes of performing the foregoing corresponding steps by the units are described in detail in the foregoing method embodiments. For brevity, details are not described herein again.

In another design, the apparatus 10 may correspond to the receive-end device in the foregoing method embodiments, or may be a component (for example, a chip) of the receive-end device.

The apparatus 10 may implement the steps or the processes performed by the receive-end device in the foregoing method embodiments. The transceiver module 11 may be configured to perform a sending/receiving-related operation of the receive-end device in the foregoing method embodiments. The processing module 12 may be configured to perform a processing-related operation of the transmit-end device in the foregoing method embodiments.

In a possible implementation, the transceiver module 11 is configured to receive a physical layer protocol data unit PPDU from a transmit-end device, where the PPDU includes a high-frequency physical layer signal, the high-frequency physical layer signal is carried in a subcarrier of a high-frequency channel, and the high-frequency physical layer signal is obtained by duplicating a basic physical layer signal M times; and the processing module 12 is configured to demodulate the PPDU.

When the apparatus 10 is configured to perform the method in FIG. 3, the transceiver module 11 may be configured to perform a step of sending information in the method, for example, step S320; and the processing module 12 may be configured to perform a processing step in the method, for example, step S330.

It should be understood that specific processes of performing the foregoing corresponding steps by the units are described in detail in the foregoing method embodiments. For brevity, details are not described herein again.

It should be further understood that the apparatus 10 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the apparatus 10 may be specifically the mobility management network element in the foregoing embodiments, and may be configured to perform the processes and/or the steps corresponding to the mobility management network element in the foregoing method embodiments; or the apparatus 10 may be specifically the terminal device in the foregoing embodiments, and may be configured to perform the processes and/or the steps corresponding to the terminal device in the foregoing method embodiments. To avoid repetition, details are not described herein again.

The apparatus 10 in the foregoing solutions has a function of implementing corresponding steps performed by a device (for example, the transmit-end device or the receive-end device) in the foregoing methods. The function may be implemented by hardware, or may be implemented by hardware executing corresponding software. The hardware or the software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit, for example, the processing module, may be replaced with a processor, to respectively perform a sending/receiving operation and a related processing operation in the method embodiments.

In addition, the transceiver module 11 may alternatively be a transceiver circuit (for example, may include a receiver circuit and a transmitter circuit), and the processing module may be a processing circuit.

FIG. 13 is a diagram of another communication apparatus 20 according to an embodiment of this application. The apparatus 20 includes a processor 21. The processor 21 is configured to execute a computer program or instructions stored in a memory 22, or read data or signaling stored in the memory 22, to perform the methods in the foregoing method embodiments. Optionally, there is one or more processors 21.

Optionally, as shown in FIG. 13, the apparatus 20 further includes the memory 22, and the memory 22 is configured to store a computer program or instructions and/or data. The memory 22 may be integrated with the processor 21, or may be disposed separately. Optionally, there is one or more memories 22.

Optionally, as shown in FIG. 13, the apparatus 20 further includes a transceiver 23, and the transceiver 23 is configured to send and/or receive a signal. For example, the processor 21 is configured to control the transceiver 23 to send and/or receive a signal.

In a solution, the apparatus 20 is configured to implement the operations performed by the transmit-end device in the foregoing method embodiments.

In another solution, the apparatus 20 is configured to implement the operations performed by the receive-end device in the foregoing method embodiments.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or transistor logic device, or a discrete hardware component, a memory (storage module) may be integrated into the processor.

It should be further noted that the memory described in this specification is intended to include but is not limited to these memories and any other appropriate type of memory.

FIG. 14 is a diagram of a chip system 30 according to an embodiment of this application. The chip system 30 (which may also be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, so that the chip system 30 can implement the methods and the functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement the operations performed by the transmit-end device in the foregoing method embodiments.

For example, the logic circuit 31 is configured to implement a processing-related operation performed by the transmit-end device in the foregoing method embodiments, and the input/output interface 32 is configured to implement a sending-related operation and/or a receiving-related operation performed by the transmit-end device in the foregoing method embodiments.

In another solution, the chip system 30 is configured to implement the operations performed by the receive-end device in the foregoing method embodiments.

For example, the logic circuit 31 is configured to implement a processing-related operation performed by the receive-end device in the foregoing method embodiments, and the input/output interface 32 is configured to implement a sending-related operation and/or a receiving-related operation performed by the receive-end device in the foregoing method embodiments.

An embodiment of this application further provides a computer-readable storage medium. The computer-readable storage medium stores computer instructions for implementing the method performed by the transmit-end device or the receive-end device in the foregoing method embodiments.

An embodiment of this application further provides a computer program product, including instructions. When the instructions are executed by a computer, the method performed by the transmit-end device or the receive-end device in the foregoing method embodiments is implemented.

An embodiment of this application further provides a communication system, including the foregoing transmit-end device and receive-end device.

For descriptions and benefits of related content of any one of the apparatuses provided above, refer to a corresponding method embodiment provided above. Details are not described herein again.

In addition, for ease of understanding embodiments of this application, the following descriptions are provided.

First, in this application, "indicate" may include a direct indication and an indirect indication. When indication information is described as indicating A, the description may include that the indication information directly indicates A or indirectly indicates A, but does not mean that the indication information necessarily carries A.

Information indicated by indication information is referred to as to-be-indicated information. During specific implementation, the to-be-indicated information may be indicated in a plurality of manners, for example, but not limited to, the following manners: The to-be-indicated information may be directly indicated. For example, the to-be-indicated information or an index of the to-be-indicated information is indicated. Alternatively, the to-be-indicated information may be indirectly indicated by indicating other information, where there is an association relationship between the other information and the to-be-indicated information. Alternatively, only a part of the to-be-indicated information may be indicated, and another part of the to-be-indicated information is known or is pre-agreed upon. For example, specific information may alternatively be indicated by an information arrangement sequence that is pre-agreed upon (for example, stipulated in a protocol), to reduce indication overheads to some extent. In addition, a common part of information may alternatively be identified and indicated in a unified manner, to reduce indication overheads caused by separately indicating same information.

Second, "first", "second", and various numeric numbers (for example, "#1" and "#2") shown in this application are merely intended to distinguish between objects for ease of description, but not to limit the scope of embodiments of this application. For example, the numbers are intended to distinguish between different information or distinguish between different STAs, but not to describe a specific order or sequence. It should be understood that objects described in this way are interchangeable in an appropriate circumstance, so that a solution other than embodiments of this application can be described.

Third, in embodiments of this application, "preset" may include being indicated by a device by using signaling, or being predefined, for example, being defined in a protocol. The "predefined" may be implemented by prestoring corresponding code or a corresponding table on a device (for example, including a station and an access point), or may be implemented in another manner of indicating related information. A specific implementation thereof is not limited in this application. For example, the "predefined" may mean being defined in a protocol.

Fourth, "stored" in embodiments of this application may mean being stored in one or more memories. The one or more memories may be separately disposed, or may be integrated in an encoder, a decoder, a processor, or a communication apparatus. Alternatively, some of the one or more memories may be separately disposed, and some of the one or more memories may be integrated in a decoder, a processor, or a communication apparatus. A type of the memory may be a storage medium in any form. This is not limited in this application.

Fifth, in embodiments of this application, a "protocol" may be a standard protocol in the communication field, for example, may include a WLAN protocol and a related protocol applied to a further communication system. This is not limited in this application.

Sixth, in embodiments of this application, "of (of)", "corresponding/relevant (corresponding/relevant)", "corresponding (corresponding)", and "associate (associate)" may sometimes be used interchangeably. It should be noted that expressed meanings are consistent when no difference between the terms is emphasized.

In several embodiments provided in this application, it should be understood that the disclosed apparatus and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

All or some of the foregoing embodiments may be implemented by software, hardware, firmware, or any combination thereof. When the embodiments are implemented by software, all or some of the embodiments may be implemented in a form of a computer program product. The computer program product includes one or more computer instructions. When the computer program instructions are loaded and executed on a computer, all or some of processes or functions according to embodiments of this application are generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

generating a physical layer protocol data unit PPDU, wherein the PPDU comprises a high-frequency physical layer signal, the high-frequency physical layer signal is carried in a subcarrier of a high-frequency channel, and the high-frequency physical layer signal is obtained by duplicating a basic physical layer signal M times; and sending the PPDU.

2. A communication method, comprising:

receiving a physical layer protocol data unit PPDU; and
demodulating the PPDU, wherein
the PPDU comprises a high-frequency physical layer signal, the high-frequency physical layer signal is carried in a subcarrier of a high-frequency channel, and the high-frequency physical layer signal is obtained by duplicating a basic physical layer signal M times.

3. The method according to claim 1 or 2, wherein a carrier spacing between subcarriers comprised in the high-frequency channel is N times a carrier spacing between subcarriers comprised in a low-frequency channel, and N is greater than 1.

4. The method according to any one of claims 1 to 3, wherein M is related to at least one of the following parameters: bandwidth of the high-frequency physical layer signal, a low-frequency signal mode corresponding to the high-frequency physical layer signal, or a preset target transmission rate of the PPDU.

5. The method according to any one of claims 1 to 4, wherein the bandwidth of the high-frequency physical layer signal is 2 GHz, and M is 32; or

the bandwidth of the high-frequency physical layer signal is 500 MHz, and M is 6; or
the bandwidth of the high-frequency physical layer signal is 320 MHz, and M is 4.

6. The method according to any one of claims 1 to 5, wherein that the high-frequency physical layer signal is obtained by duplicating a basic physical layer signal M times comprises:
the high-frequency physical layer signal is generated based on at least modulation symbols carried in M groups of data subcarriers, each group of the M groups of data subcarriers comprises P data subcarriers, and the basic physical layer signal comprises modulation symbols carried in P data subcarriers.

7. The method according to any one of claims 1 to 6, wherein that the high-frequency physical layer signal is obtained by duplicating a basic physical layer signal M times comprises:
the high-frequency physical layer signal is obtained by duplicating the basic physical layer signal M times based on a sequence, and the sequence comprises M elements or M-1 elements.

8. The method according to claim 7, wherein

the basic physical layer signal is modulation symbols carried in a group of data subcarriers, and the high-frequency physical layer signal is generated based on the modulation symbols carried in the M groups of data subcarriers, wherein modulation symbols carried in a $1^{st}$ group of data subcarriers to an $M^{th}$ group of data subcarriers among the M groups of data subcarriers are obtained based on the sequence and modulation symbols carried in a group of data subcarriers corresponding to the basic physical layer signal, and the sequence comprises M elements; or
the basic physical layer signal is modulation symbols carried in a $1^{st}$ group of data subcarriers among the M groups of data subcarriers corresponding to the high-frequency physical layer signal, modulation symbols carried in a $2^{nd}$ group of data subcarriers to an $M^{th}$ group of data subcarriers among the M groups of data subcarriers are obtained by duplicating, based on the sequence, the modulation symbols carried in the $1^{st}$ group of data subcarriers, and the sequence comprises M-1 elements.

9. The method according to claim 7 or 8, wherein the bandwidth of the high-frequency physical layer signal is 500 MHz, M is 6, P is 8, and the sequence is [1 1 1 -1 1 -1] or [1 1 -1 1 - 1]; or
the bandwidth of the high-frequency physical layer signal is 2 GHz, M is 32, P is 7, and the sequence is [1 1 -1 1 -1 1 1 -1 1 -1 1 1 1 1 -1 -1 -1 1 1 1 1 1 -1 -1 1 1 -1 -1 1 -1 -1 -1] or [1 - 1 1 -1 1 1 -1 1 -1 1 1 1 1 -1 -1 -1 1 1 1 1 1 -1 -1 1 1 -1 -1 1 -1 -1 -1].

10. The method according to any one of claims 1 to 6, wherein that the high-frequency physical layer signal is obtained by duplicating a basic physical layer signal M times comprises:
the high-frequency physical layer signal is obtained by duplicating the basic physical layer signal M times based on a matrix, and the matrix comprises P×M elements or P×(M-1) elements.

**11.** The method according to claim 10, wherein

the basic physical layer signal is modulation symbols carried in a group of data subcarriers, and the high-frequency physical layer signal is generated based on the modulation symbols carried in the M groups of data subcarriers, wherein modulation symbols carried in a 1st group of data subcarriers to an Mth group of data subcarriers among the M groups of data subcarriers are obtained based on the matrix and modulation symbols carried in a group of data subcarriers corresponding to the basic physical layer signal, and the matrix comprises P×M elements; or

the basic physical layer signal is modulation symbols carried in a 1st group of data subcarriers among the M groups of data subcarriers corresponding to the high-frequency physical layer signal, modulation symbols carried in a 2nd group of data subcarriers to an Mth group of data subcarriers among the M groups of data subcarriers are obtained by duplicating, based on the comprised matrix, the modulation symbols carried in the 1st group of data subcarriers, and the matrix comprises P×(M-1) elements.

**12.** The method according to claim 10 or 11, wherein the bandwidth of the high-frequency physical layer signal is 500 MHz, M is 6, P is 8, and the matrix is as follows:

$$
\begin{bmatrix}
1 & 1 & 1 & 1 & -1 & -1 \\
1 & 1 & -1 & 1 & 1 & -1 \\
1 & -1 & -1 & 1 & 1 & -1 \\
1 & 1 & -1 & -1 & -1 & -1 \\
1 & -1 & 1 & -1 & -1 & -1 \\
1 & -1 & 1 & 1 & -1 & 1 \\
1 & 1 & 1 & 1 & 1 & 1 \\
1 & -1 & -1 & 1 & 1 & -1
\end{bmatrix}
\text{ or }
\begin{bmatrix}
1 & 1 & 1 & -1 & -1 \\
1 & -1 & 1 & 1 & -1 \\
-1 & -1 & 1 & 1 & -1 \\
1 & -1 & -1 & -1 & -1 \\
-1 & 1 & -1 & -1 & -1 \\
-1 & 1 & 1 & -1 & 1 \\
1 & 1 & 1 & 1 & 1 \\
-1 & -1 & 1 & 1 & -1
\end{bmatrix};
$$

or
the bandwidth of the high-frequency physical layer signal is 2 GHz, M is 32, P is 7, and the matrix is as follows:

$$
\begin{bmatrix}
1 & 1 & -1 & -1 & 1 & -1 & 1 & 1 & -1 & 1 & 1 & -1 & -1 & 1 & 1 & 1 & 1 & -1 & 1 & -1 & -1 & 1 & 1 & 1 & -1 & -1 & 1 & -1 & 1 & 1 & -1 & -1 \\
1 & -1 & -1 & -1 & -1 & -1 & -1 & -1 & 1 & -1 & -1 & 1 & -1 & -1 & -1 & 1 & 1 & 1 & -1 & -1 & -1 & -1 & -1 & -1 & 1 & -1 & 1 & -1 & -1 & -1 & -1 & -1 \\
1 & -1 & -1 & -1 & -1 & -1 & 1 & -1 & -1 & -1 & 1 & -1 & 1 & 1 & 1 & -1 & -1 & 1 & -1 & 1 & 1 & 1 & 1 & 1 & -1 & -1 & 1 & -1 & 1 & -1 & 1 & 1 \\
1 & -1 & 1 & 1 & 1 & -1 & 1 & 1 & -1 & -1 & -1 & -1 & -1 & 1 & -1 & -1 & -1 & 1 & -1 & 1 & -1 & 1 & 1 & -1 & 1 & -1 & 1 & -1 & -1 & 1 & -1 & 1 \\
1 & 1 & -1 & -1 & 1 & 1 & -1 & 1 & -1 & 1 & -1 & -1 & -1 & 1 & 1 & 1 & 1 & -1 & -1 & -1 & -1 & -1 & -1 & -1 & 1 & 1 & 1 & -1 & -1 & -1 & 1 & -1 \\
1 & 1 & -1 & 1 & -1 & -1 & 1 & -1 & 1 & -1 & -1 & 1 & -1 & -1 & -1 & -1 & -1 & 1 & 1 & 1 & 1 & -1 & -1 & 1 & 1 & 1 & -1 & -1 & -1 & 1 & 1 & 1 \\
1 & 1 & 1 & -1 & -1 & 1 & -1 & -1 & -1 & -1 & -1 & 1 & 1 & -1 & 1 & 1 & -1 & 1 & 1 & 1 & -1 & 1 & -1 & 1 & 1 & 1 & -1 & -1 & -1 & 1 & -1
\end{bmatrix},
$$

or

$$
\begin{bmatrix}
1 & -1 & -1 & 1 & -1 & 1 & 1 & -1 & 1 & 1 & -1 & -1 & 1 & 1 & 1 & 1 & -1 & 1 & -1 & -1 & 1 & 1 & 1 & -1 & -1 & 1 & -1 & 1 & 1 & -1 & -1 \\
-1 & -1 & -1 & -1 & -1 & -1 & -1 & 1 & -1 & -1 & 1 & -1 & -1 & -1 & 1 & 1 & -1 & -1 & -1 & -1 & -1 & -1 & 1 & -1 & 1 & -1 & -1 & -1 & -1 & -1 & -1 \\
-1 & -1 & -1 & -1 & -1 & 1 & -1 & -1 & -1 & 1 & -1 & 1 & 1 & 1 & -1 & -1 & 1 & -1 & 1 & 1 & 1 & 1 & 1 & -1 & -1 & 1 & -1 & 1 & -1 & 1 & 1 \\
-1 & 1 & 1 & 1 & -1 & 1 & 1 & -1 & -1 & -1 & -1 & -1 & 1 & -1 & -1 & -1 & 1 & -1 & 1 & -1 & 1 & 1 & -1 & 1 & -1 & 1 & -1 & -1 & 1 & -1 & 1 \\
1 & -1 & -1 & 1 & 1 & -1 & 1 & -1 & 1 & -1 & -1 & -1 & 1 & 1 & 1 & 1 & -1 & -1 & -1 & -1 & -1 & -1 & -1 & 1 & 1 & 1 & -1 & -1 & -1 & 1 & -1 \\
1 & -1 & 1 & -1 & -1 & 1 & -1 & 1 & -1 & -1 & 1 & -1 & -1 & -1 & -1 & -1 & 1 & 1 & 1 & 1 & -1 & -1 & 1 & 1 & 1 & -1 & -1 & -1 & 1 & 1 & 1 \\
1 & 1 & -1 & -1 & 1 & -1 & -1 & -1 & -1 & -1 & 1 & 1 & -1 & 1 & 1 & -1 & 1 & 1 & 1 & -1 & 1 & -1 & 1 & 1 & 1 & -1 & -1 & -1 & 1 & -1
\end{bmatrix}.
$$

**13.** The method according to any one of claims 1 to 6, wherein that the high-frequency physical layer signal is obtained by duplicating a basic physical layer signal M times comprises:
the high-frequency physical layer signal is obtained by duplicating the basic physical layer signal M times based on a duplication mode, and the duplication mode comprises at least one of the following:

performing symbol negation on a modulation symbol carried in an even-numbered subcarrier, and keeping a modulation symbol carried in an odd-numbered subcarrier unchanged; or

performing symbol negation on a modulation symbol carried in an odd-numbered subcarrier, and keeping a modulation symbol carried in an even-numbered subcarrier unchanged; or

duplicating modulation symbols carried in all subcarriers; or

performing symbol negation on modulation symbols carried in all subcarriers.

14. The method according to claim 13, wherein the basic physical layer signal is modulation symbols carried in a group of data subcarriers among the M groups of data subcarriers corresponding to the high-frequency physical layer signal, and modulation symbols carried in a $1^{st}$ group of data subcarriers to an $M^{th}$ group of data subcarriers among the M groups of data subcarriers are obtained by duplicating, M times based on the duplication mode, modulation symbols carried in a group of data subcarriers corresponding to the basic physical layer signal; or

the basic physical layer signal is modulation symbols carried in a $1^{st}$ group of data subcarriers among the M groups of data subcarriers corresponding to the high-frequency physical layer signal, and modulation symbols carried in a $2^{nd}$ group of data subcarriers to an $M^{th}$ group of data subcarriers among the M groups of data subcarriers are obtained by duplicating, M-1 times based on the duplication mode, the modulation symbols carried in the $1^{st}$ group of data subcarriers.

15. The method according to claim 13 or 14, wherein when the bandwidth of the high-frequency physical layer signal is 320 MHz, M is 4, and a total quantity of the data subcarriers is 52, the duplication mode comprises:

duplicating modulation symbols carried in data subcarriers in the $1^{st}$ group of data subcarriers, and performing symbol negation on a modulation symbol carried in an even-numbered data subcarrier, to obtain modulation symbols carried in the $2^{nd}$ group of data subcarriers;

duplicating the modulation symbols carried in the data subcarriers in the $1^{st}$ group of data subcarriers, and performing symbol negation on the modulation symbols carried in the data subcarriers, to obtain modulation symbols carried in a $3^{rd}$ group of data subcarriers; and

duplicating modulation symbols carried in data subcarriers in the $2^{nd}$ group of data subcarriers, to obtain modulation symbols of a $4^{th}$ group of data subcarriers.

16. The method according to any one of claims 13 to 15, wherein the $2^{nd}$ group of data subcarriers to the $M^{th}$ group of data subcarriers correspond to different duplication modes.

17. The method according to any one of claims 8 to 16, wherein modulation symbols carried in the M groups of data subcarriers are binary phase shift keying BPSK modulation symbols.

18. The method according to any one of claims 8 to 17, wherein the data subcarriers further comprise another data subcarrier different from the M groups of data subcarriers, and a modulation scheme for the another data subcarrier is any BPSK modulation.

19. The method according to any one of claims 8 to 18, wherein the data subcarriers are subcarriers other than guard subcarriers, direct current subcarriers, and pilot subcarriers among subcarriers of the high-frequency physical layer signal.

20. The method according to any one of claims 1 to 5, wherein that the high-frequency physical layer signal is obtained by duplicating a basic physical layer signal M times comprises:
the high-frequency physical layer signal is obtained by duplicating the basic physical layer signal M times based on an extension sequence, wherein the basic physical layer signal is a signal obtained through binary convolutional code BCC encoding, and the extension sequence comprises M elements.

21. The method according to claim 20, wherein M is 4, and the extension sequence is [1 0 0 1].

22. The method according to any one of claims 1 to 21, wherein the PPDU further comprises a preamble part, and the preamble part is obtained by duplicating an orthogonal frequency division multiplexing OFDM symbol M times.

23. A communication apparatus, comprising a unit or a module for performing the method according to any one of claims 1 to 22.

24. A communication apparatus, comprising a communication interface and a processor, wherein the communication interface is configured to send and receive data or signaling, and the processor is configured to execute a computer program or instructions, so that the communication apparatus performs the method according to any one of claims 1 to 22.

25. The apparatus according to claim 24, further comprising a memory, wherein the memory is configured to store the computer program or the instructions.

26. A communication system, comprising a transmit-end device and a receive-end device, wherein the system is configured to perform the method according to any one of claims 1 to 22.

27. A computer-readable storage medium, comprising a computer program or instructions, wherein when the computer program or the instructions are run on a computer, the method according to any one of claims 1 to 22 is performed.

FIG. 1

| L-STF | L-LTF | L-SIG | HT-SIG | HT-STF | HT-LTF | ... | HT-LTF | DATA |
|-------|-------|-------|--------|--------|--------|-----|--------|------|

Pre-HT modulation field       HT modulation field

(a)

| L-STF | L-LTF | L-SIG | VHT-SIG-A | VHT-STF | VHT-LTF | VHT-SIGB | DATA |
|-------|-------|-------|-----------|---------|---------|----------|------|

Pre-VHT modulation field       VHT modulation field

(b)

| L-STF | L-LTF | L-SIG | RL-SIG | HE-SIG-A | HE-SIG-B | HE-STF | HE-LTF | ... | HE-LTF | DATA | PE |
|-------|-------|-------|--------|----------|----------|--------|--------|-----|--------|------|----|

Pre-HE modulation field       HE modulation field

(c)

| EHT-SIG common field | EHT-SIG user-specific field |
|----------------------|------------------------------|

| L-STF | L-LTF | L-SIG | RL-SIG | U-SIG SYM 1 | U-SIG SYM 2 | EHT-SIG | EHT-STF | EHT-LTF | Data |
|-------|-------|-------|--------|-------------|-------------|---------|---------|---------|------|

| Version independent field | Version dependent information field | Cyclic redundancy code | Tail |
|---------------------------|-------------------------------------|------------------------|------|

(d)

FIG. 2

```
┌─────────────────┐          ┌─────────────────┐
│  Transmit-end   │          │   Receive-end   │
│     device      │          │     device      │
└────────┬────────┘          └────────┬────────┘
┌────────┴────────┐                   │
│ S310: Generate a│                   │
│      PPDU       │                   │
└────────┬────────┘                   │
         │                            │
         │────────S320: PPDU─────────▶│
         │                   ┌────────┴────────┐
         │                   │S330: Demodulate │
         │                   │    the PPDU     │
         │                   └─────────────────┘
```

FIG. 3

```
┌─────────────────────────┐
│   Generate a preamble    │
│      OFDM symbol         │
└────────────┬────────────┘
             │
             ▼
┌─────────────────────────┐
│   Duplication (DUP)      │
└────────────┬────────────┘
             │
             ▼
┌─────────────────────────┐
│   Analog and radio       │
│ frequency (Analog and RF)│
└────────────┬────────────┘
             │
             ▼
```

FIG. 4

FIG. 5

| Constellation mapping (Constellation mapper) | ... | Constellation mapping (Constellation mapper) |

↓ ... ↓

| Duplication (DUP) | ... | Duplication (DUP) |

↓ ↓

...

| Spatial and frequency mapping (spatial and frequency mapping) |

↓ ↓

FIG. 6

| Encoding (encoder) |

↓

| Duplication (DUP) |

↓

...

| Constellation mapping (Constellation mapper) | ... | Constellation mapping (Constellation mapper) |

↓ ↓

FIG. 7

Determine modulation symbols carried in a 1$^{st}$ group of data subcarriers among M groups ⎯ S410

Obtain, based on the modulation symbols carried in the 1$^{st}$ group of data subcarriers, modulation symbols carried in a 2$^{nd}$ group of data subcarriers to an M$^{th}$ group of data subcarriers ⎯ S420

Generate a data part of a PPDU based on the obtained modulation symbols carried in the M groups of data subcarriers ⎯ S430

FIG. 8

(a)

FIG. 9

(b)

Perform BCC encoding to obtain a basic physical layer signal — S610

Duplicate encoded bits M times based on an extension sequence — S620

FIG. 10

Determine modulation symbols carried in a $1^{st}$ group of data subcarriers among M groups — S810

Determine, based on a DUP modulation scheme, modulation symbols carried in other groups of data subcarriers — S820

FIG. 11

10

Transceiver module 11

Processing module 12

Storage module 13

FIG. 12

FIG. 13

FIG. 14

## INTERNATIONAL SEARCH REPORT

| International application No. |
| --- |
| **PCT/CN2023/104017** |

**A.    CLASSIFICATION OF SUBJECT MATTER**

H04L 1/00(2006.01)i

According to International Patent Classification (IPC) or to both national classification and IPC

**B.    FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, CNKI, VEN, CNABS, 3GPP: 物理层协议数据单元, PPDU, 复制, 载波, 间隔, 扩大, 增大, 增加, 拉大, 高频, 子载波, 副载波, 副本, 相位, 旋转, 偏移, 斜坡, 间隔, 速率, 模式, 序列, 调制, 解调, 取反, 奇数, 偶数, Physical layer protocol data unit, PPDU, duplication, carrier, spacing, scaling up, enlarge, high frequency, subcarrier, copy, phase, rotation, offset, ramp, rate, mode, sequence, modulation, demodulation, negating, odd, even

**C.    DOCUMENTS CONSIDERED TO BE RELEVANT**

| Category* | Citation of document, with indication, where appropriate, of the relevant passages | Relevant to claim No. |
| --- | --- | --- |
| X | US 2022029772 A1 (QUALCOMM INC.) 27 January 2022 (2022-01-27) description, paragraphs [0045]-[0187], and figures 1-11 | 1-27 |
| X | US 2021391961 A1 (NXP USA, INC.) 16 December 2021 (2021-12-16) description, paragraphs [0048]-[0113] | 1-27 |
| A | WO 2022059974 A1 (LG ELECTRONICS INC.) 24 March 2022 (2022-03-24) entire document | 1-27 |
| A | CN 114339893 A (HUAWEI TECHNOLOGIES CO., LTD.) 12 April 2022 (2022-04-12) entire document | 1-27 |
| A | US 2016128057 A1 (NEWRACOM, INC.) 05 May 2016 (2016-05-05) entire document | 1-27 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **07 August 2023** | **23 August 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

EP 4 576 624 A1

INTERNATIONAL SEARCH REPORT
Information on patent family members

International application No.

**PCT/CN2023/104017**

| Patent document cited in search report | | | Publication date (day/month/year) | Patent family member(s) | | | Publication date (day/month/year) |
|---|---|---|---|---|---|---|---|
| US | 2022029772 | A1 | 27 January 2022 | EP | 4186209 | A1 | 31 May 2023 |
| | | | | TW | 202209840 | A | 01 March 2022 |
| | | | | WO | 2022020622 | A1 | 27 January 2022 |
| | | | | KR | 20230038475 | A | 20 March 2023 |
| | | | | BR | 112023000310 | A2 | 31 January 2023 |
| US | 2021391961 | A1 | 16 December 2021 | None | | | |
| WO | 2022059974 | A1 | 24 March 2022 | None | | | |
| CN | 114339893 | A | 12 April 2022 | WO | 2022068689 | A1 | 07 April 2022 |
| US | 2016128057 | A1 | 05 May 2016 | US | 2018175990 | A1 | 21 June 2018 |
| | | | | KR | 20160052430 | A | 12 May 2016 |

Form PCT/ISA/210 (patent family annex) (July 2022)

**REFERENCES CITED IN THE DESCRIPTION**

**Patent documents cited in the description**

- CN 202211083804